(19) **Europäisches Patentamt / European Patent Office / Office européen des brevets**

(11) **EP 4 604 032 A1**

(12) **EUROPEAN PATENT APPLICATION**
published in accordance with Art. 153(4) EPC

(43) Date of publication:
**20.08.2025 Bulletin 2025/34**

(21) Application number: **23876655.4**

(22) Date of filing: **09.10.2023**

(51) International Patent Classification (IPC):
*G06Q 10/06* (2023.01)    *B25J 9/16* (2006.01)

(52) Cooperative Patent Classification (CPC):
**B25J 9/16; G06Q 10/06**

(86) International application number:
**PCT/CN2023/123587**

(87) International publication number:
**WO 2024/078453 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **12.10.2022  CN 202211245844
12.10.2022  CN 202211249762**

(71) Applicant: **Beijing Geekplus Technology Co. Ltd
Beijing 100102 (CN)**

(72) Inventor: **ZHANG, Yan
Beijing 100102 (CN)**

(74) Representative: **Manna, Sara et al
Società Italiana Brevetti S.p.A.
Piazza di Pietra, 39
00186 Roma (IT)**

(54) **ROBOT SCHEDULING METHOD AND APPARATUS**

(57)    Provided in the present disclosure are a robot scheduling method and apparatus. The robot scheduling method comprises: acquiring the global average number of tasks to be executed in a specified scenario and the local average number of tasks to be executed in regions; according to the global average number of tasks to be executed and the local average number of tasks to be executed in the regions, predicting a global task execution loss for the specified scenario; determining a robot cross-region scheduling policy according to the global task execution loss; and performing cross-region scheduling on a target robot in the specified scenario by using the robot cross-region scheduling policy. A global task execution loss for a specified scenario is predicted by means of the global average number of tasks to be executed and the local average number of tasks to be executed, so as to obtain a loss value during execution by robots when tasks to be executed in the current regions are allocated, and the loss value is further used as reference data, so as to obtain a corresponding robot cross-region scheduling policy by taking a more ideal robot distribution in each region as the goal, thereby making full use of robot quantity resources, and improving the execution efficiency of the tasks.

```
                                                                    S202
┌─────────────────────────────────────────────────────────────┐
│ acquiring a global average number of tasks to be executed in a │
│ specified scenario and a local average number of tasks to be   │
│ executed in regions, in which the specified scenario is        │
│ divided into a plurality of regions in advance                 │
└─────────────────────────────────────────────────────────────┘
                              ↓                                     S204
┌─────────────────────────────────────────────────────────────┐
│ predicting a global task execution loss of the specified       │
│ scenario according to the global average number of tasks to    │
│ be executed and the local average number of tasks to be        │
│ executed in the regions                                        │
└─────────────────────────────────────────────────────────────┘
                              ↓                                     S206
┌─────────────────────────────────────────────────────────────┐
│ determining a robot cross-region scheduling policy according   │
│ to the global task execution loss                              │
└─────────────────────────────────────────────────────────────┘
                              ↓                                     S208
┌─────────────────────────────────────────────────────────────┐
│ performing cross-region scheduling on a target robot in the    │
│ specified scenario by using the robot cross-region scheduling  │
│ policy                                                         │
└─────────────────────────────────────────────────────────────┘
```

FIG. 2

EP 4 604 032 A1

## Description

## CROSS-REFERENCE TO RELATED APPLICATION

This application claims priority to Chinese Patent Application No. 202211249762.6, titled "Robot Scheduling Method and Device," filed with the China National Intellectual Property Administration on October 12, 2022, and Chinese Patent Application No. 202211245844.3, titled "Task Execution Method and Device," filed with the China National Intellectual Property Administration on October 12, 2022, the entire contents of which are incorporated herein by reference.

## FIELD

The present invention relates to the field of logistics warehousing technology, and more particularly to a robot scheduling method. The present invention also relates to a robot scheduling device, a computing device and a computer-readable storage medium.

## BACKGROUND

With development of robot technology, more and more schedulable robots are being used in industrial services such as freight, warehousing, logistics and catering, which greatly facilitates production and life of human being. However, at the same time, with increase in a number of robots and a number of tasks that robots need to execute, a new challenge is presented for robot scheduling between multiple regions in a specified scenario. Due to an increasing number of robots, a time for a single poll to determine a target robot to execute a task also increases, and an execution efficiency of a task does not tend to increase linearly according to increase in a site area.

At present, generation of a task is determined by a hit link, and the generation of the task is unevenly distributed in all regions of the specified scenario. For example, the specified scenario has three regions, namely a region 1, a region 2 and a region 3. The region 1 needs to perform a task of handing household goods, the region 2 needs to perform a task of handing electronic products, and the region 3 needs to perform a task of handing food. In a promotion time of electronic products, a hit probability of the region 2 is relatively high, and a number of corresponding handling tasks is relatively large. In addition, a number of robots is limited, and a mismatch between a distribution of robots in regions and a number of tasks generated in regions often leads to a situation that a number of robots in a region with few tasks is abundant and a number of robots in a region with more tasks is scarce in a scheduling process, which fails to make full use of robot quantity resources and an execution efficiency of a task is insufficient. For scheduling of robots within a region, the robot needs to be bound to a position within the region, and then further execute a task to be executed at that position. However, for such a mechanism that the robot is bound to the position and then executes the task to be executed, it may cause a large number of remote calls to other robots and cause a corresponding deadlock problem, which seriously affects an execution efficiency of the task to be executed and increases an execution cost of the task to be executed. Therefore, there is an urgent need for a robot scheduling method that may make full use of the robot quantity resources and improve the execution efficiency of task.

## SUMMARY

In view of this, an embodiment of the present invention provides a robot scheduling method to solve technical defects existing in the prior art. The embodiment of the present invention also provides a robot scheduling device, a computing device and a computer-readable storage medium.

According to a first aspect of embodiments of the present invention, a robot scheduling method is provided. The method includes acquiring a global average number of tasks to be executed in a specified scenario and a local average number of tasks to be executed in regions, in which the specified scenario is divided into a plurality of regions in advance, predicting a global task execution loss of the specified scenario according to the global average number of tasks to be executed and the local average number of tasks to be executed in the regions, determining a robot cross-region scheduling policy according to the global task execution loss, and performing cross-region scheduling on a target robot in the specified scenario by using the robot cross-region scheduling policy.

Optionally, after performing the cross-region scheduling on the target robot in the specified scenario by using the robot cross-region scheduling policy, the method further includes acquiring first binding information, first position information about a task to be executed and current position information about the robot, in which the first binding information includes a binding relationship between the robot and second position information about a task being currently executed, parsing the first binding information to acquire the second position information, calculating a first distance between the robot and the task to be executed as well as a second distance between the robot and the task being currently executed according to the first position information, the second position information and the current position information, and performing switching to execute the task to be executed in a case that the first distance is less than the second distance.

According to a second aspect of embodiments of the present invention, a robot scheduling device is provided. The robot scheduling device includes a first acquisition module configured to acquire a global average number of tasks to be executed in a specified scenario and a local average number of tasks to be executed in regions, in which the specified scenario is divided into a plurality of regions in advance, a prediction module configured to predict a global task execution loss of the specified scenario according to the global average number of tasks to be executed and the local average number of tasks to be executed in the regions, a determination module configured to determine a robot cross-region scheduling policy according to the global task execution loss, and a scheduling module configured to perform cross-region scheduling on a target robot in the specified scenario by using the robot cross-region scheduling policy.

Optionally, the device further includes a task execution device, and includes a second acquisition module configured to acquire first binding information, first position information about a task to be executed and current position information about the robot, in which the first binding information includes a binding relationship between the robot and second position information about a task being currently executed, a parsing module configured to parse the first binding information to acquire the second position information, a calculation module configured to calculate a first distance between the robot and the task to be executed as well as a second distance between the robot and the task being currently executed according to the first position information, the second position information and the current position information, and a switching execution module configured to perform the switching to execute the task to be executed in a case that the first distance is less than the second distance.

According to a third aspect of embodiments of the present invention, a computing device is provided and includes a memory, and a processor. The memory is configured to store therein computer-executable instructions, and the processor is configured to execute the computer-executable instructions to implement steps of the robot scheduling method.

According to a fourth aspect of embodiments of the present invention, there is provided a computer-readable storage medium having stored therein computer instructions that, when executed by a processor, cause the processor to implement steps of the robot scheduling method.

According to a fifth aspect of embodiments of the present invention, there is provided a chip having stored therein a computer program that, when executed by the chip, cause the chip to implement steps of the robot scheduling method.

According to the robot scheduling method provided in the present invention, the global average number of tasks to be executed in the specified scenario and the local average number of tasks to be executed in the regions are acquired. The global task execution loss of the specified scenario is predicted according to the global average number of tasks to be executed and the local average number of tasks to be executed in the regions. The robot cross-region scheduling policy is determined according to the global task execution loss. The cross-region scheduling is performed on the target robot in the specified scenario by using the robot cross-region scheduling policy. The global task execution loss of the specified scenario is predicted according to the global average number of tasks to be executed and the local average number of tasks to be executed, so as to obtain a loss value when a task to be executed is executed by a robot under a current assignment of the tasks to be executed in the regions. The loss value is further taken as reference data to obtain a corresponding robot cross-region scheduling policy by taking a more ideal distribution of robots in the regions as a goal, thus making full use of robot quantity resources, and improving an execution efficiency of a task.

**BRIEF DESCRIPTION OF THE DRAWINGS**

FIG. 1 is a schematic diagram illustrating a robot scheduling system provided in an embodiment of the present invention.

FIG. 2 is a flow chart showing a robot scheduling method provided in an embodiment of the present invention.

FIG. 3 is a schematic diagram illustrating a specified scenario in a robot scheduling method provided in an embodiment of the present invention.

FIG. 4 is a schematic diagram illustrating another specified scenario in a robot scheduling method provided in an embodiment of the present invention.

FIG. 5 is a schematic diagram illustrating a robot cross-region scheduling policy under an iteration termination condition in a robot scheduling method provided in an embodiment of the present invention.

FIG. 6 is a schematic diagram illustrating another specified scenario in a robot scheduling method provided in an embodiment of the present invention.

FIG. 7 is a schematic diagram illustrating another specified scenario in a robot scheduling method provided in an embodiment of the present invention.

FIG. 8 is a schematic diagram illustrating robot cross-region scheduling in a robot scheduling method provided in an embodiment of the present invention.

FIG. 9 is a schematic diagram illustrating a number of tasks and a distribution of robots in regions of a specified scenario in a robot scheduling method provided in an embodiment of the present invention.

FIG. 10 is a schematic diagram illustrating an analysis model in a robot scheduling method provided in an embodiment of the present invention.

FIG. 11 is a schematic diagram illustrating a target analysis model in a robot scheduling method provided in an embodiment of the present invention.

FIG. 12 is a schematic diagram illustrating a cross-region transfer channel in a robot scheduling method provided in an embodiment of the present invention.

FIG. 13 is a schematic diagram illustrating robot scheduling in a robot scheduling method provided in an embodiment of the present invention.

FIG. 14 is a schematic diagram illustrating a robot increment value in a robot scheduling method provided in an embodiment of the present invention.

FIG. 15 is a schematic diagram illustrating another cross-region transfer channel in a robot scheduling method provided in an embodiment of the present invention.

FIG. 16 is a schematic diagram illustrating another cross-region transfer channel in a robot scheduling method provided in an embodiment of the present invention.

FIG. 17 is a flow chart showing another robot scheduling method provided in an embodiment of the present invention.

FIG. 18 is a schematic diagram illustrating robot remote scheduling in the prior art.

FIG. 19 is a schematic diagram illustrating robot deadlock in the prior art.

FIG. 20 is a schematic diagram illustrating lane task execution in a robot scheduling method provided in an embodiment of the present invention.

FIG. 21 is a schematic diagram illustrating a method for switching a task to be executed in a robot scheduling method provided in an embodiment of the present invention.

FIG. 22 is a flow chart showing a robot scheduling method applied to a warehousing scenario provided in an embodiment of the present invention.

FIG. 23 is a schematic diagram illustrating a robot scheduling device provided in an embodiment of the present invention.

FIG. 24 is a schematic diagram illustrating another robot scheduling device provided in an embodiment of the present invention.

FIG. 25 is a block diagram of a computing device provided in an embodiment of the present invention.

## DETAILED DESCRIPTION

Various illustrative embodiments of the present invention will now be described in detail with reference to the accompanying drawings. It is to be noted that a relative arrangement, numerical expressions and numerical values of components and steps set forth in these embodiments do not limit the scope of the present invention unless otherwise specifically stated.

The following description of at least one illustrative embodiment is merely illustrative in nature and is in no way intended to limit the present invention and its application or uses.

Technologies, methods and devices known to ordinary technicians in the relevant fields may not be discussed in detail, but in appropriate cases, the technologies, the methods and the devices should be regarded as part of the specification.

It is to be noted that similar reference numbers and letters refer to similar items in the following drawings, and therefore, once an item is defined in one drawing, it does not need to be further discussed in subsequent drawings.

Embodiments of the present invention are described below in conjunction with the accompanying drawings.

In this context, "up," "down," "front," "back," "left," "right," and the like are merely intended to indicate a relative position relationship between related parts, rather than to limit absolute positions of these related parts.

In this context, "first," "second," and the like are merely intended to distinguish each other, and do not indicate a degree and order of importance as well as prerequisites for existence of each other, etc.

In this context, "equal," "same," and the like are not strictly limited in a mathematical and/or geometric sense, but also include errors that may be understood by those skilled in the art and are allowed in manufacturing or use, etc.

Robot Scheduling: a robot is scheduled by setting a scheduling rule on a robot scheduling terminal.

A robot scheduling method is provided in the present invention. The present invention also relates to a robot scheduling device, a computing device and a computer-readable storage medium, which are described in detail one by one in following embodiments.

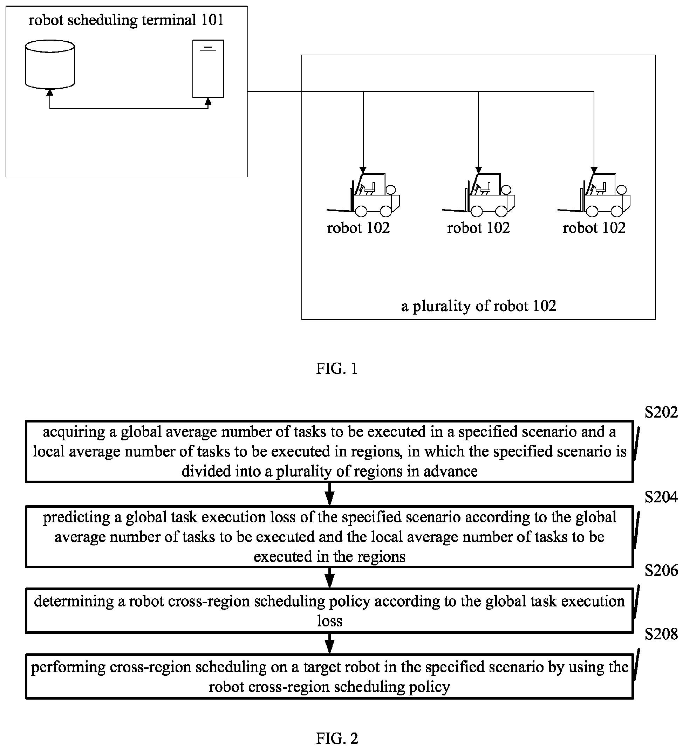

FIG. 1 is a schematic diagram illustrating a robot scheduling system provided in an embodiment of the present invention. The robot scheduling system provided in the embodiment of the present invention includes robots 102 in regions and a robot scheduling terminal 101. The robot scheduling terminal 101 executes program code of a scheduling rule to implement motion scheduling for the robots 102 in the regions. In a multi-robot motion scheduling method provided in an embodiment of the present invention, the robots 102 in the regions move by receiving the program code of the scheduling rule sent by the robot scheduling terminal 101. The above-mentioned robot scheduling terminal 101 may be any electronic product that may perform a human-computer interaction with users, such as a personal computer (PC), a mobile phone, a pocket PC, a tablet computer, etc.

The robot scheduling terminal 101 first acquires a global average number of tasks to be executed in a specified scenario and a local average number of tasks to be executed in regions, then predicts a global task execution loss of the specified scenario according to the global average number of tasks to be executed and the local average number of tasks to be executed in the regions, determines a robot cross-region scheduling policy according to the global task execution loss, and finally performs cross-region scheduling on a robot 102 in the specified scenario by using the robot cross-region scheduling policy.

A robot scheduling method will be described in detail in following embodiments.

FIG. 2 is a flow chart showing a robot scheduling method provided in an embodiment of the present invention, and the method includes following steps.

In step S202, a global average number of tasks to be executed in a specified scenario and a local average number of tasks to be executed in regions are acquired. The specified scenario is divided into a plurality of regions in advance.

An executor of the embodiment of the present invention is a robot scheduling terminal, and an application scenario is the specified scenario including the plurality of regions. In the embodiment of the present invention, according to a number of tasks generated in the regions in the specified scenario, a deployment of a current number of robots is evaluated, and a more ideal deployment of a global number of robots is obtained. After a more ideal configuration of the global number of robots is determined, robot cross-region scheduling is implemented by using a robot cross-region scheduling policy.

An executor of the robot scheduling method provided in the embodiment of the present invention is a robot scheduling terminal that may schedule robots in the regions.

The specified scenario is divided into the plurality of regions in advance, each region is assigned with a generated task to be executed, and a robots in distributed in each region.

The specified scenario is a physical scenario in which a robot is scheduled to execute a task to be executed in the plurality of regions, for example, a logistics warehouse scenario, a factory handling scenario, a restaurant and shopping mall scenario, etc. The plurality of regions are task execution regions where a task to be executed is generated in the specified scenario and a robot is deployed, for example, a sorting region, a shelving region, an unshelving region in a logistics warehouse in the logistics warehouse scenario, a region of factory buildings in the factory handling scenario, a region in the restaurant and a purchase region in the shopping mall, etc. The above-mentioned regions may generate a task to be executed, for example, a sorting task, a shelving task, an unshelving task, a handling task, a food delivery task, a purchase handling task, and the like, and all the above-mentioned tasks may be executed by a deployed robot.

The global average number of tasks to be executed is an average number of tasks to be executed for a single robot in the specified scenario. The local average number of tasks to be executed is an average number of tasks to be executed for a single robot in the regions. Based on the global average number of tasks to be executed and the local average number of tasks to be executed, difference between a number of tasks to be executed in a region and a number of tasks to be executed in a global region may be reflected, and then it may be represented whether a number of robots deployed to this region is adapted to the number of tasks to be executed in this region, providing a data reference for subsequent determination of a robot cross-region scheduling policy.

A way to acquire the global average number of tasks to be executed in the specified scenario and the local average number of tasks to be executed in the regions is as follows. According to a total number of tasks to be executed in the specified scenario, a total number of robots, a total number of tasks to be executed in the regions and a current distribution of robots in the regions, the global average number of tasks to be executed in the scenario and the local average number of tasks to be executed in the regions are acquired.

For example, 1,000 tasks to be executed exist in the specified scenario, 12 robots are deployed in advance, and the specified scenario includes 3 regions, namely a region 1, a region 2 and a region 3. 500 tasks to be executed exist in the region 1, and 4 robots are deployed in the region 1 in advance. 300 tasks to be executed exist in the region 2, and 4 robots are deployed in the region 2 in advance. 200 tasks to be executed exist in the region 3, and 4 robots are deployed in region 3 in advance. The global average number of tasks to be executed is 1,000 divided by 12, which is 83. The local average number of tasks to be executed for the region 1 is 500 divided by 4, which is 125.

By acquiring the global average number of tasks to be executed in the specified scenario and the local average number of tasks to be executed in the regions, a data foundation is laid for subsequent prediction of a global task execution loss of the specified scenario.

In step S204, a global task execution loss of the specified scenario is predicted according to the global average number of tasks to be executed and the local average number of tasks to be executed in the regions.

The global task execution loss of the specified scenario represents an efficiency loss of executing a task to be executed under different distributions of robots in the specified scenario. By predicting the global task execution loss of the specified scenario, efficiency difference of task execution under the different distributions of robots and an ideal distribution of robots in the specified scenario is reflected. Generally, a reason for the global task execution loss is that an deployment of robots in the specified scenario is unreasonable, resulting in tasks to be executed in some regions being executed quickly, or tasks to be executed in some regions being in a state of waiting for execution for a long time from a global perspective.

A way to predict the global task execution loss of the specified scenario according to the global average number of tasks to be executed and the local average number of tasks to be executed in the regions is as follows. Local task execution losses of the regions are determined according to the global average number of tasks to be executed and the local average number of tasks to be executed in the regions, and the global task execution loss of the specified scenario is predicted according to the task execution losses of the regions. The local task execution losses of the regions are differences between the local average number of tasks to be executed in the regions and the global average number of tasks to be executed.

Continuing with the above example, the global average number of tasks to be executed is 83, a local average number of tasks to be executed in the region 1 is 125, a local average number of tasks to be executed in the region 2 is 75, and a local average number of tasks to be executed in the region 3 is 50. A local task execution loss of the region 1 is determined to be 125 minus 83, which is 42. A local task execution loss of the region 2 is determined to be 83 minus 75, which is 8. A local task execution loss of the region 3 is determined to be 83 minus 50, which is 33. The global task execution loss is 83.

The global task execution loss of the specified scenario is predicted according to the global average number of tasks to be executed and the local average number of tasks to be executed in the regions, and it is determined whether the current distribution of robots is the ideal distribution of robots, providing reference data for subsequent determination of a robot cross-region scheduling policy.

In step S206, a robot cross-region scheduling policy is determined according to the global task execution loss.

The robot cross-region scheduling policy is an execution policy for cross-region scheduling of robots in a current region. For example, current distribution information about robots is that 2 robots exist in the region 1, 3 robots exist in the region 2, and 1 robot exists in the region 3. A more ideal target distribution information about robots is that 1 robot exists in the region 1, 2 robots exist in the region 2, and 3 robots exist in the region 3. A corresponding robot cross-region scheduling policy may be that 1 robot in the region 1 is scheduled to region 2, and 2 robots in the region 2 are scheduled to the region 3. A corresponding robot cross-region scheduling policy may also be that 1 robot in the region 1 is scheduled to the region 3, and 1 robot in the region 2 is scheduled to the region 3.

A way to determine the robot cross-region scheduling policy according to the global task execution loss is as follows. Target distribution information about robots is determined according to the global task execution loss, and the robot cross-region scheduling policy is determined according to the target distribution information about the robots. Further, determining the target distribution information about the robots according to the global task execution loss may be that according to the global task execution loss, the target distribution information about the robots is calculated by using a neural network model, and the robot cross-region scheduling policy may be further determined; or may be that according to the global task execution loss, a global task execution loss after cross-region pre-scheduling is obtained after performing cross-region pre-scheduling on the robots in the regions, the global task execution loss is compared with the global task execution loss after cross-region pre-scheduling, and distribution information about robots with a smaller loss is taken as the target distribution information about the robots.

Continuing with the above example, according to the global task execution loss of 83, after performing the cross-region scheduling on the robots in the regions, it is determined that target distribution information about robots is that 6 robots exist in the region 1, 4 robots exist in the region 2, and 2 robots exist in the region 3. According to the target distribution information about the robots being that 6 robots exist in the region 1, 4 robots exist in the region 2, and 2 robots exist in the region 3, it is determined that the robot cross-region scheduling policy is that 2 robots in the region 3 are scheduled to the region 1.

In step S208, cross-region scheduling is performed on a target robot in the specified scenario by using the robot cross-region scheduling policy.

A way to perform the cross-region scheduling on the target robot in the specified scenario by using the robot cross-region scheduling policy is as follows. A cross-region transfer channel corresponding to the robot cross-region scheduling policy is determined based on a position relationship between the regions, and the cross-region scheduling is performed on the target robot in the specified scenario based on the cross-region transfer channel.

Continuing with the above example, the position relationship between the regions is that the region 1, the region 2 and the region 3 are connected in sequence, and the region 1 and the region 3 are not directly connected. Based on the above position relationship, it is determined that a cross-region transfer channel corresponding to the robot cross-region scheduling policy (scheduling 2 robots in the region 3 to the region 1) is region 3 - region 2 - region 1. Based on this cross-region transfer channel, the 2 robots in the region 3 are scheduled to the region 1 via the region 2.

In an embodiment of the present invention, the global average number of tasks to be executed in the specified scenario and the local average number of tasks to be executed in the regions are acquired, the global task execution loss of the specified scenario is predicted according to the global average number of tasks to be executed and the local average number of tasks to be executed in the regions, the robot cross-region scheduling policy is determined according to the global task execution loss, and the cross-region scheduling is performed on the target robot in the specified scenario by using the robot cross-region scheduling policy. The global task execution loss of the specified scenario is predicted according to the global average number of tasks to be executed and the local average number of tasks to be executed, and a loss value when a task to be executed is executed by a robot under a current assignment of the tasks to be executed in the regions is obtained. The loss value is then taken as reference data, and a corresponding robot cross-region scheduling policy is obtained by taking a more ideal distribution of the robots in the regions as a goal, thus making full use of robot quantity resources and improving an execution efficiency of a task.

Optionally, step S204 includes following steps. Object idle information about the regions is predicted respectively according to the global average number of tasks to be executed and the local average number of tasks to be executed in the regions. The global task execution loss of the specified scenario is calculated according to the object idle information about the regions.

The object idle information about the regions is representation information representing difference between the current distribution of robots and an ideal target distribution of robots in the regions. The object idle information about the regions is a local task execution loss. It represents an efficiency loss of executing a task to be executed under different distributions of robots in the regions. By predicting the local task execution loss of the regions, difference in the efficiency of executing a task under the different distributions of robots and the ideal distribution of robots in the regions is reflected. A calculation formula is shown in formula 1:

$$I = (Ni - Ng)^2 \times m \qquad \text{Formula 1}$$

where $I$ represents object idle information about an region, $Ni$ represents a local average number of tasks to be executed in this region, Ng represents a global average number of tasks to be executed, and m represents a number of robots deployed in this region. Influence of positive and negative signs is eliminated by squaring.

When $Ni$-$Ng$ is a positive value, it represents that the number of robots deployed in this region is insufficient, resulting in an average number of tasks to be executed for each robot in this region greater than an average number of tasks to be executed for each robot in a global region. When $Ni$-$Ng$ is a negative value, it indicates that the number of robots deployed in this region is too large, resulting in an average number of tasks to be executed for each robot in this region less than an average number of tasks to be executed by each robot in a global region.

A way to calculate the global task execution loss of the specified scenario according to the object idle information about the regions is as follows. The idle information about the regions is summed to obtain the global task execution loss of the specified scenario. A summation formula is shown in formula 2:

$$Loss = \sum_{i=1}^{n} I_i = \sum_{i=1}^{n} (Ni - Ng)^2 \times m \qquad \text{Formula 2}$$

where Loss represents a global task execution loss of a specified scenario, the specified scenario is divided into $n$ regions, and $I\_i$ represents object idle information about a $i^{th}$ region in the specified scenario. $Ni$ represents a local average number of tasks to be executed in this region, Ng represents a global average number of tasks to be executed, and m represents a number of robots deployed in this region. Influence of positive and negative signs is eliminated by squaring.

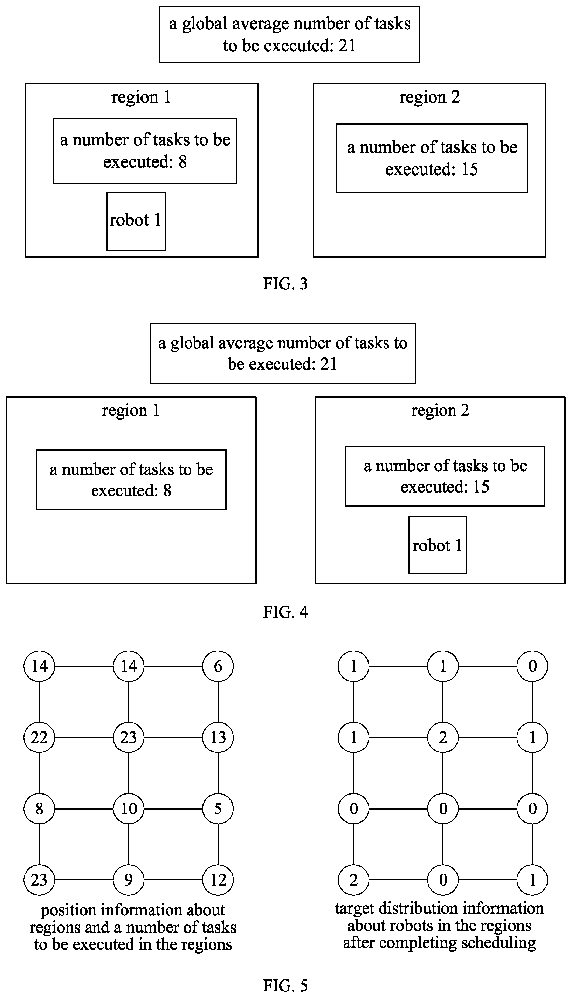

FIG. 3 is a schematic diagram illustrating a specified scenario in a robot scheduling method provided in an embodiment of the present invention. FIG. 4 is a schematic diagram illustrating another specified scenario in a robot scheduling method provided in an embodiment of the present invention.

For example, as shown in FIG. 3, the specified scenario is divided into a region 1 and a region 2, and a global average number of tasks to be executed in the specified scenario is 21. A number of tasks to be executed in the region 1 is 8, and 1 robot exists in the region 1, namely a robot 1. A number of tasks to be executed in the region 2 is 15, and no robot exists in the region 2. According to formula 1, object idle information about the region 1 is calculated to be (8-21)^2, and according to formula 2, a global task execution loss of the specified scenario in FIG. 3 is calculated to be (8-21)^2. The robot 1 in the region 1 is scheduled to the region 2. As shown in FIG. 4, a global average number of tasks to be executed in the specified scenario is 21 A number of tasks to be executed in the region 1 is 8, and no robot exists in the region 1. A number of tasks to be executed in the region 2 is 15, and 1 robot exists in the region 2, namely the robot 1. According to formula 1, object idle information about the region 2 is calculated to be (15-21)^2, and according to formula 2, a global task execution loss of the specified scenario in FIG. 4 is calculated to be $(15-21)^2$.

According to the global average number of tasks to be executed and the local average number of tasks to be executed in regions, the object idle information about the regions is predicted respectively. The global task execution loss of the specified scenario is calculated according to the object idle information about the regions. By predicting the object idle information about the regions, difference between the current distribution information about the robots and the ideal target distribution information about the robots in the regions is determined in more detail, and then the global task execution loss of the specified scenario is acquired, providing more accurate reference data for the subsequent determination of a robot cross-region scheduling policy, improving effectiveness of robot cross-region scheduling, making full use of robot quantity resources and improving an execution efficiency of a task.

Optionally, step S206 includes a following step. The robot cross-region scheduling policy is determined with the global task execution loss as an optimization goal.

The global task execution loss represents an efficiency loss of executing tasks to be executed in the regions in a global region under the current distribution of robots. Therefore, the global task execution loss is taken as the optimization goal, to make the current distribution information about the robots as close as possible to the ideal target distribution information about the robots, so that a number of robots in the regions is neither too much nor too little.

A way to determine the robot cross-region scheduling policy with the global task execution loss as the optimization goal is as follows. The global task execution loss is taken as the optimization goal, iterative cross-region scheduling is performed on the robots in the regions, and a corresponding cross-region scheduling policy is determined when an iteration termination condition is met. The cross-region scheduling refers to performing virtual scheduling on the robots in the regions of the specified scenario, without actually performing the cross-region scheduling. Iterative cross-region pre-scheduling refers to repeatedly perform cross-region pre-scheduling when the iteration termination condition is not met. The iteration termination condition is a determination condition for determining whether a global task execution loss corresponding to current cross-region scheduling reaches the optimization goal, which may be a number of iteration times, may be a target global task execution loss (a global task execution loss threshold), may also be an upper and lower limits of the number of robots in the regions, etc., and which is not limited herein.

FIG. 5 is a schematic diagram illustrating a robot cross-region scheduling policy under an iteration termination condition in a robot scheduling method provided in an embodiment of the present invention.

For example, as shown in FIG. 5, a left figure shows position information about regions and a number of tasks to be executed in the regions. The iteration termination condition is limited to an upper limit of a number of robots in the regions being 2. After completing scheduling, target distribution information about robots in regions on a right figure may be obtained correspondingly. It may be understood that in a region with a large number of tasks to be executed, 2 robots are scheduled to execute the tasks, in a region with a medium number of tasks to be executed, 1 robot is scheduled to execute the tasks, and in a region with a small number of tasks to be executed, no robot is scheduled.

For example, the iteration termination condition is a number of iteration times, specifically 3. Iterative cross-region scheduling is performed on the robots in the regions. A global task execution loss of a first iteration is 120, a global task execution loss of a second iteration is 110, and a global task execution loss of a third iteration is 100. A robot cross-region scheduling policy corresponding to the third iteration is determined.

The robot cross-region scheduling policy is determined with the global task execution loss as the optimization goal. A determined robot cross-region scheduling policy is determined according to a distribution that is closer to an ideal distribution of robots, which improves effectiveness of robot cross-region scheduling, makes full use of robot quantity resources and improves an execution efficiency of a task.

Optionally, determining the robot cross-region scheduling policy with the global task execution loss as the optimization goal includes following steps. Current distribution information about robots in the regions of the specified scenario and a current local average number of tasks to be executed in the regions are determined. Cross-region pre-scheduling is performed on the robots in the regions according to the current distribution information about the robots in the regions, and a target local average number of tasks to be executed in the regions after performing the cross-region pre-scheduling is calculated. A current global task execution loss and a target global task execution loss of the specified scenario are predicted according to the global average number of tasks to be executed, the current local average number of tasks to be executed and the target local average number of tasks to be executed in the regions. The target global task execution loss is compared with the current global task execution loss. A robot cross-region scheduling policy corresponding to the cross-region pre-scheduling is determined in a case that the target global task execution loss is lower than the current global task execution loss.

Performing the cross-region scheduling on the robots refers to performing virtual scheduling on the robots in the regions of the specified scenario, without actually performing the cross-region scheduling. By performing the cross-region scheduling on the robots, the target distribution information about the robots after performing the cross-region pre-scheduling is obtained, and the target local average number of tasks to be executed in the regions is calculated, the current global task execution loss and the target global task execution loss after performing the cross-region pre-scheduling are further determined. An amplitude of the current global task execution loss is compared to an amplitude of the target global

8

task execution loss, and it is determined whether a global task execution loss after performing the pre-scheduling is optimized compared to a global task execution loss before performing the pre-scheduling, so as to determine the robot cross-region scheduling policy. Performing the cross-region pre-scheduling on the robots may refer to performing iteration pre-scheduling, a corresponding robot cross-region scheduling policy is determined until a preset iteration stop condition is met.

The current distribution information about the robots is distribution information about a number of robots in a current region. The current local average number of tasks to be executed is an average number of tasks to be executed for a single robot in the current region. The target local average number of tasks to be executed is an average number of tasks to be executed for a single robot in the region after performing the cross-region scheduling. The current global task execution loss represents an efficiency loss of executing tasks to be executed under the current distribution of robots in the regions. The target global task execution loss represents an efficiency loss of executing tasks to be executed under a distribution of robots in the regions after performing the cross-region scheduling on the robots.

A way to determine the current distribution information about the robots in the regions of the specified scenario and the current local average number of tasks to be executed in the regions is as follows. A number of robots in the regions of the specified scenario and the current local average number of tasks to be executed in the regions are determined.

A way to perform the cross-region pre-scheduling on the robots in the regions according to the current distribution information about the robots in the regions, and calculate the target local average number of tasks to be executed in the regions after performing the cross-region pre-scheduling is as follows. The cross-region pre-scheduling is performed on the robots in the regions according to the current distribution information about the robots in the regions, and after performing the cross-region pre-scheduling, the target distribution information about the robots in the regions is obtained. The target local average number of tasks to be executed in the regions after performing the cross-region scheduling is calculated according to the target distribution information about the robots in the regions. Further, a way to calculate, according to the target distribution information about the robots in the regions, the target local average number of tasks to be executed in the regions after performing the cross-region scheduling is as follows. The target local average number of tasks to be executed in the regions after performing the cross-region pre-scheduling is calculated according to a total number of tasks to be executed in the regions and a number of robots in the regions after performing the cross-region pre-scheduling.

A way to predict the current global task execution loss and the target global task execution loss of the specified scenario according to the global average number of tasks to be executed, the current local average number of tasks to be executed and the target local average number of tasks to be executed in the regions is as follows. Current object idle information about the regions is predicted respectively according to the global average number of tasks to be executed and the current local average number of tasks to be executed in the regions, and the current global task execution loss of the specified scenario is calculated according to the current object idle information about the regions. Target object idle information about the regions is predicted respectively according to the global average number of tasks to be executed and the target local average number of tasks to be executed in the regions, and the target global task execution loss of the specified scenario is calculated according to the target object idle information about the regions. A formula for calculating the object idle information is shown in formula 1 above, which will not be elaborated herein. A formula for calculating the global task execution loss is shown in formula 2 above, which will not be elaborated herein.

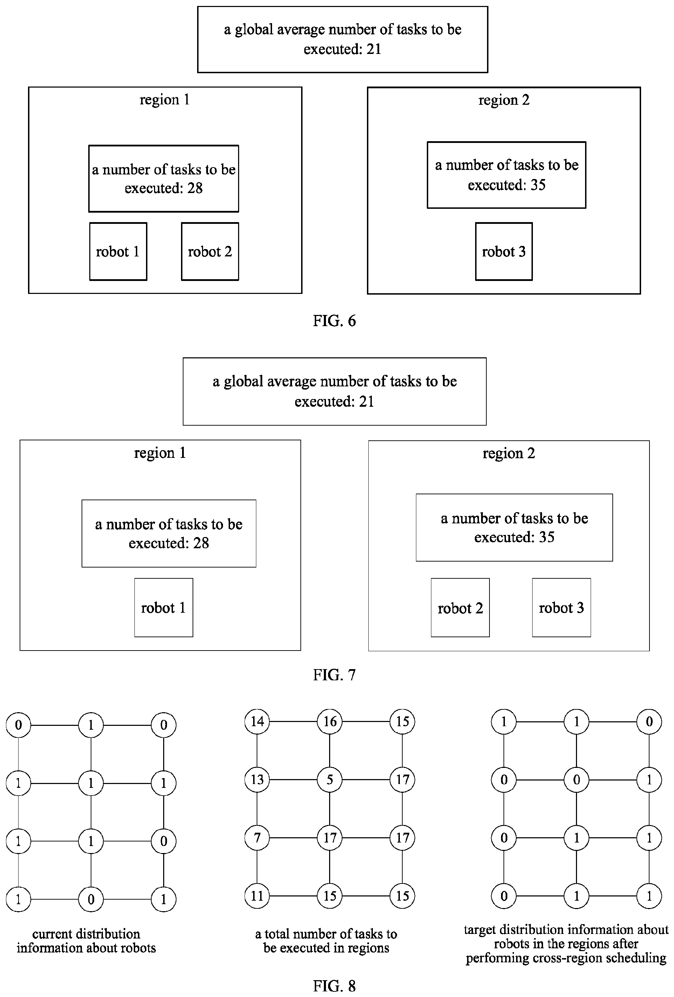

FIG. 6 is a schematic diagram illustrating another specified scenario in a robot scheduling method provided in an embodiment of the present invention. FIG. 7 is a schematic diagram illustrating another specified scenario in a robot scheduling method provided in an embodiment of the present invention.

For example, as shown in FIG. 6, the specified scenario is divided into a region 1 and a region 2. A global average number of tasks to be executed in the specified scenario is 21. A number of tasks to be executed in the region 1 is 28, and 2 robots exist in the region 1, namely a robot 1 and a robot 2. A local average number of tasks to be executed in the region 1 is 14. A number of tasks to be executed in the region 2 is 35, and 1 robot exists in the region 2, namely a robot 3. A local average number of tasks to be executed in the region 2 is 35. By using the above formula 2, a global task execution loss of the specified scenario in FIG. 6 is calculated to be $(14-21)^2 \times 2 + (35-21)^2$. The robot 2 in the region 1 is scheduled to the region 2. By using the above formula 2, a global task execution loss of the specified scenario in FIG. 7 is calculated to be $(28-21)^2 + (17.5-21)^2 \times 2$. By comparing a target global task execution loss of FIG. 7 with a current global task execution loss of FIG. 6, a difference between the global task execution losses of the specified scenarios in FIG. 7 and FIG. 6 is obtained to be -220.5, indicating that the global task execution loss of the specified scenario in FIG. 6 is lower than the global task execution loss of the specified scenario in FIG. 5. That is, robots in the region 1 and the region 2 are deployed according to distribution information about robots in FIG. 7.

The local average number of tasks to be executed before and after performing cross-region scheduling and the global average number of tasks to be executed are calculated, the global task execution losses before and after performing cross-region pre-scheduling are further determined. The global task execution losses before and after performing the cross-region pre-scheduling are compared, a corresponding robot cross-region scheduling policy is determined when the global task execution loss after performing the cross-region pre-scheduling is relatively small. A determined robot cross-region scheduling policy is determined according to a distribution that is close to an ideal distribution of robots, which improves effectiveness of robot cross-region scheduling, makes full use of robot quantity resources and improves an execution efficiency of a task.

Optionally, step S208 includes following steps. Current distribution information about robots in regions of the specified scenario and target distribution information about robots in the regions corresponding to the robot cross-region scheduling policy are determined. Incremental information about the regions is calculated according to the current distribution information about the robots and the target distribution information about the robots in the regions. An outflow region and an inflow region in the regions are determined according to the incremental information about the regions. A cross-region transfer channel from each outflow region to the inflow region is determined. The cross-region scheduling is performed on the target robot in the specified scenario based on the cross-region transfer channel.

Generally, after step S202 to step S206, the robot cross-region scheduling policy is determined, representing that the target distribution information about the robots after performing the cross-region scheduling is inconsistent with the current distribution information about the robots. FIG. 8 is a schematic diagram illustrating robot cross-region scheduling in a robot scheduling method provided in an embodiment of the present invention.

As shown in FIG. 8, a left figure represents current distribution information about robots, a middle figure represents a total number of tasks to be executed in regions, and a right figure represents target distribution information about robots after performing the cross-region scheduling. Based on the total number of tasks to be executed in the regions in the middle figure, the current distribution information about the robots in the left figure is converted into the target distribution information about the robots in the right figure.

The current distribution information about the robots in the regions is distribution information about a current number of robots in the regions, and the target distribution information about the robots in the regions is distribution information about a number of robots in the regions after completing the robot cross-region scheduling.

The incremental information about the regions is a difference between a number of robots in the regions before performing the cross-region scheduling and a number of robots in the regions after performing the cross-region scheduling, which may be a positive value and may also be a negative value.

A way to calculate the incremental information about the regions according to the current distribution information about the robots and the target distribution information about the robots in the regions is as follows. A difference between the current distribution information about the robots and the target distribution information about the robots in the regions is determined as the incremental information about the regions.

A way to determine the outflow region and the inflow region in the regions according to the incremental information about the regions is as follows. The outflow region and inflow region in the regions are determined according to positive and negative values of the incremental information about the regions. Further, a region with a positive value of the incremental information about the regions is determined as the inflow region, and a region with a negative value of the incremental information about the regions is determined as the outflow region.

A way to determine the cross-region transfer channel from the each outflow region to the inflow region is as follows. The outflow region is taken as a starting point of cross-region transfer, the inflow region is taken as an end point of cross-region transfer, and thus the cross-region transfer channel from the each outflow region to the inflow region is determined.

For example, the current distribution information about the robots in the regions is that 2 robots exist in a region 1, 1 robot exists in a region 2, and 3 robots exist in a region 3. After completing robot cross-region scheduling, the target distribution information about the robots in the regions is that no robot exists in the region 1, 1 robot exists in the region 2, and 5 robots exist in the region 3. The difference between the current distribution information about the robots and the target distribution information about robots in the regions is determined as the incremental information about the regions. That is, incremental information about the region 1 is -2, incremental information about the region 2 is 0, and incremental information about the region 3 is +2. The region 3 with a positive value of the increment information is determined as an inflow region, and the region 1 with a negative value of the increment information is determined as an outflow region. The outflow region (the region 1) is taken as a starting point of cross-region transfer, the inflow region (the region 3) is taken as an end point of cross-region transfer, and thus a cross-region transfer channel from the outflow region to the inflow region (region 1 - region 2 - region 3) is determined. Cross-region scheduling is performed on 2 target robots in the region 1, and the 2 target robots are transferred to the region 3 via the cross-region transfer channel of region 1 - region 2 - region 3.

The current distribution information about the robots in the regions of the specified scenario and the target distribution information about the robots in the regions corresponding to the robot cross-region scheduling policy are determined. The incremental information about the regions is calculated according to the current distribution information about the robots and the target distribution information about the robots in the regions. The outflow region and the inflow region in the regions are determined according to the incremental information about the regions. The cross-region transfer channel from the each outflow region to the inflow region is determined. The cross-region scheduling is performed on the target robot in the specified scenario based on the cross-region transfer channel. The incremental information about the regions is calculated according to the current distribution information about the robots and target distribution information about the robots in the regions, the outflow region and inflow region in the regions are further determined, and the cross-region transfer channel is obtained for cross-region scheduling, which ensures accuracy and effectiveness of cross-region scheduling.

Optionally, determining the cross-region transfer channel from the each outflow region to the inflow region includes following steps. An analysis model is constructed according to the outflow regions and the inflow regions. The analysis model includes a first resource loss of transferring a robot from each outflow region to an adjacent inflow region and a second resource loss of transferring a robot via a transfer region. The transfer region is a region between the outflow region and the inflow region for transferring the robot. Based on the analysis model, the cross-region transfer channel from the each outflow region to the inflow region is determined by using a preset resource loss optimization algorithm.

The analysis model is an analysis model with a constraint to determine the cross-region transfer channel. The cross-region scheduling policy is obtained directly from the current distribution information about the robots and the target distribution information about the robots, and there are some problems when faced with a large-scale specified scenario. For example, if a robot is transferred from an outflow region to an inflow region and the outflow region is far apart from the inflow region, the scheduling needs to consume more resources. Therefore, it needs to transfer a robot from a region adjacent to the inflow region as much as possible. For another example, 2 robots are transferred from an outflow region to an inflow region, 1 robot is transferred from the inflow region to the outflow region, and such a two-way transfer consumes meaningless resources. Therefore, it needs to prevent transferring a robot from the inflow region to the outflow region. For another example, if 5 robots are deployed in an outflow region, an upper limit of a number of robots transferred to other regions is not more than 5. Therefore, the upper limit of the number of robots transferred to other regions is not more than a number of robots in the outflow region.

The constraints in the embodiment of the present invention are as follows.

(1) The outflow region is a region where a number of target robots in target distribution information about robots exceeds a current number of robots in current distribution information about robots. The outflow region cannot transfer a robot from other regions. A maximum number of robots that may flow out of the outflow region is the current number of robots minus the number of target robots, which may ensure that a robot in the outflow region flows out to other regions purely without excessive outflow.

(2) The inflow region is a region where a number of target robots in target distribution information about robots is lower than a current number of robots in current distribution information about robots. The inflow region cannot transfer a robot from other regions. A maximum number of robots that may flow into the inflow region is the number of target robots minus the current number of robots, which may ensure that a robot from other regions flows into the inflow region purely without excessive inflow.

(3) The transfer region is a region where a number of target robots in target distribution information about robots is equal to a current number of robots in current distribution information about robots. The transfer region allows both inflow and outflow, but is restricted to direct inflow from an outflow region and direct outflow to an inflow region, and the inflow and outflow cannot be transferred by other transfer regions.

(4) A maximum number of robots that may flow out of an outflow region is not be greater than a current number of robots. For example, a current number of robots in an outflow region is 1, and even if a current number of robots minus a number of target robots is 3, only 1 robot may flow out.

The first resource loss is a preset resource loss value of transferring a robot from an outflow region to an adjacent inflow region, and values of the first resource losses are consistent. The second resource loss is a preset resource loss value of transferring a robot via a transfer region. The second resource loss is equal to the first resource loss.

For the preset resource loss optimization algorithm, three special regions are set up, namely a virtual inflow region, a virtual outflow region and a virtual pool region. The virtual inflow region is a virtual upstream of the inflow region, a maximum number of robots that may flow into the outflow region from the virtual inflow region is a number of target robots minus a current number of robots, and only an actual source may flow to the virtual pool. Combined with a polynomial time minimum resource loss algorithm, the cross-region transfer channel from the each outflow region to the inflow region may be efficiently obtained even when a number of outflow regions is extremely large. When the outflow region is not adjacent to the inflow region, the virtual pool region may be taken as a virtual transfer region to implement robot transfer. However, a third resource loss of transferring a robot from the outflow region to the virtual pool region is greater than the first resource loss and the second resource loss, so that the robot may be preferentially transferred directly to the inflow region via the adjacent outflow region or transferred to the inflow region via the transfer region.

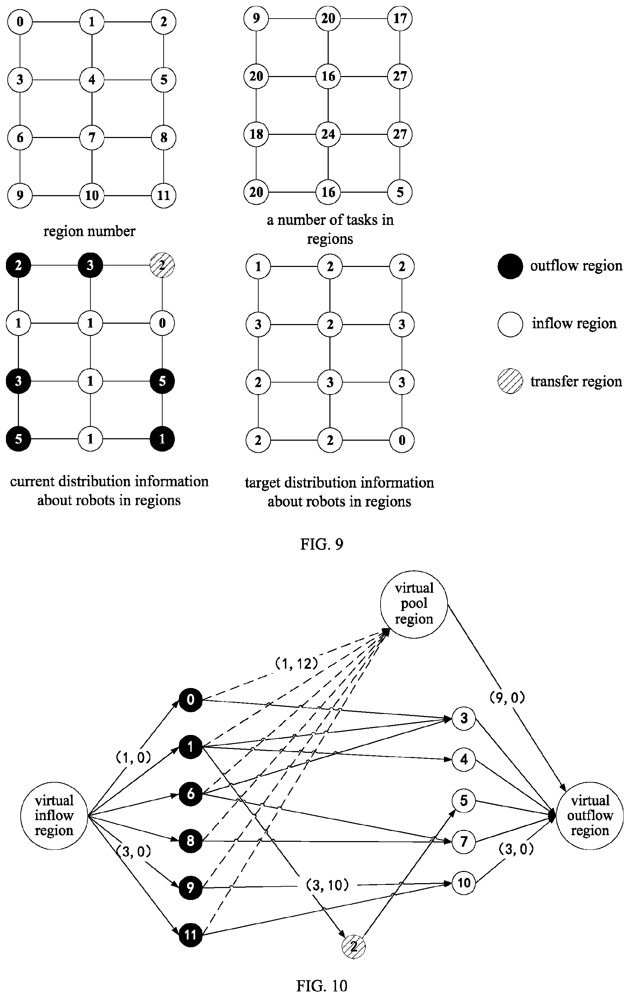

The following uses FIG. 9 to illustrate the inflow region, the outflow region and the transfer region. FIG. 9 is a schematic diagram illustrating a number of tasks and a distribution of robots in regions of a specified scenario in a robot scheduling method provided in an embodiment of the present invention. As shown in FIG. 9, the specified scenario is divided into 12 regions, namely regions 0 to 11. A total number of robots is 25. A maximum number of robots that may be accommodated in each region is configured to be 5, and may also be configured individually for each region. A maximum number of robots that may flow out of each region is configured to be 5, and may also be configured individually for each region. According to a total number of tasks to be executed in the regions and current distribution information about robots in the regions, according to steps S202 to S206, the robot cross-region scheduling policy is determined, and corresponding target distribution information about robots in the regions is obtained. A number of tasks to be executed in a region 2 has not changed before and after performing cross-region scheduling, and the region 2 is a transfer region. A number of target robots in a region 0, a region 1, a region 6, a region 8, a region 9 and a region 11 exceeds a current number of robots, and the region 0, the region 1, the region 6, the region 8, the region 9 and the region 11 are outflow regions. A number of target robots in a region 3, a region 4, a region 5, a region 7 and a region 10 is lower than a current number of robots, and the region 3, the region 4, the region 5, the region 7 and the region 10 are inflow regions.

The analysis model is described in detail below by using FIG. 10. The preset resource loss optimization algorithm is used to determine the cross-region transfer channel for illustration. FIG. 10 is a schematic diagram illustrating an analysis model in a robot scheduling method provided in an embodiment of the present invention. As shown in FIG. 10, the first resource loss between the outflow region and the inflow region is set as 10, the second resource loss between the outflow region and the transfer region is set as 10, and the third resource loss between the outflow region and the virtual pool region is set as 12. A number of robots transferred from virtual inflow region to the outflow region is a number of target robots minus a current number of robots, a resource loss of transferring a robot from the virtual inflow region to the outflow region is 0. A number of robots transferred from the inflow region to the virtual outflow region is a number of target robots minus a current number of robots, and a resource loss of transferring a robot from the inflow region to the virtual outflow region is also 0. For example, for a region 0, a number of robots transferred from the virtual inflow region to the outflow region (i.e., 1) is a number of target robots (i.e., 2) minus a current number of robots (i.e., 1), a resource loss is 0, a number of robots transferred from the region 0 to the virtual pool region is also 1, and a resource loss is 12. For a region 9, a number of robots transferred from the virtual inflow region to the outflow region (i.e., 3) is a number of target robots (i.e., 5) minus a current number of robots (i.e., 2), a resource loss is 0, a number of robots transferred from the region 9 to a region 10 is also 3, and a first resource loss is 10. A number of robots transferred from a region 10 to the virtual outflow region is also 3, and a resource loss is 0. For the virtual pool region, since a total number of robots transferred from the region 0, a region 1, a region 6, a region 8, a region 9 and a region 11 is 9, a resource loss is 0. A total number of robots transferred from the virtual pool region to the virtual outflow region is also 9, and a resource loss is 0. For the region 11, its adjacent regions are the region 8 and the region 10. However, the region 10 is the inflow region and the region 8 is the outflow region. Therefore only the region 10 is connected to the region 11, and the region 8 is not connected to the region 11 since it is impossible to transfer a robot from the region 8 to the region 11.

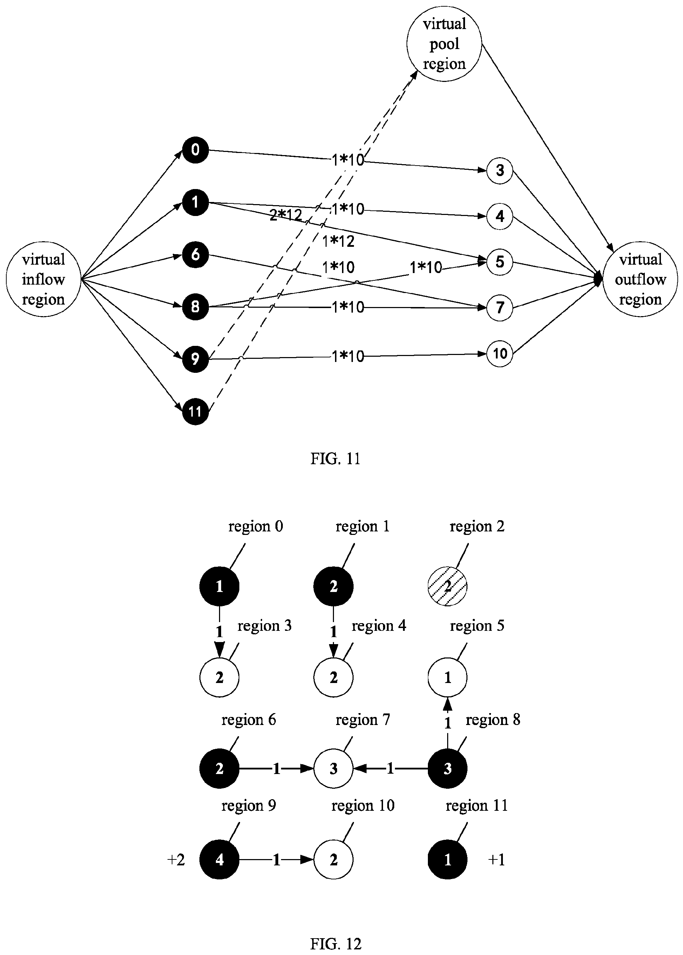

A target analysis model in FIG. 11 is obtained by sorting and analyzing the analysis model in FIG. 10. FIG. 11 is a schematic diagram illustrating a target analysis model in a robot scheduling method provided in an embodiment of the present invention. As shown in FIG. 11, the target analysis model is an analysis model with a minimum resource loss. A resource loss of the target analysis model with the minimum resource loss is calculated to be (1*10*6+2*12+1*12), which is equal to 96.

According to a cross-region transfer channel with the minimum resource loss determined in FIG. 11, a distribution of robots obtained after scheduling is shown in FIG. 12. FIG. 12 is a schematic diagram illustrating a cross-region transfer channel in a robot scheduling method provided in an embodiment of the present invention. 2 robots are transferred to the region 9 via the virtual pool region, 1 robot is transferred to the region 11 via the virtual pool region, 1 robot is transferred from the region 0 to the region 3, 1 robot is transferred from the region 1 to the region 4, 1 robot is transferred from the region 6 to the region 7, 1 robot is transferred from the region 8 to the region 7, 1 robot is transferred from the region 8 to the region 5, and 1 robot is transferred from the region 9 to the region 10. A robot cross-region scheduling solution with the minimum resource loss is obtained via the cross-region transfer channels in FIG. 12.

A way to determine, based on the analysis model, the cross-region transfer channel from the each outflow region to the inflow region by using the preset resource loss optimization algorithm is as follows. Based on the analysis model, the target analysis model is determined by using the preset resource loss optimization algorithm. The target analysis model is the analysis model with the minimum resource loss, and the cross-region transfer channel from the each outflow region to the inflow region is determined according to the target analysis model.

The analysis model is constructed according to the outflow regions and the inflow regions, and based on the analysis model, the cross-region transfer channel from the each outflow region to the inflow region is determined by using the preset resource loss optimization algorithm, improving applicability of the robot scheduling method in the large number of region of the specified scenarios, improving a scheduling efficiency and reducing a resource loss.

Optionally, determining the cross-region transfer channel from the each outflow region to the inflow region includes following steps. Increment values of the outflow regions are acquired. A cross-region transfer channel from each outflow region to an adjacent inflow region is determined in sequence according to the increment values of the outflow regions from small to large. For an inflow region where a cross-region transfer channel has not been determined, a cross-region transfer channel from each outflow region to the inflow region via a transfer region for transferring a robot is determined according to a neighbor relationship between the regions.

**EP 4 604 032 A1**

The cross-region scheduling policy is obtained directly from the current distribution information about the robots and the target distribution information about the robots, and there are some problems when faced with a large-scale specified scenario. For example, if a robot is transferred from an outflow region to an inflow region and the outflow region is far apart from the inflow region, the scheduling needs to consume more resources. Therefore, it needs to transfer a robot from a region adjacent to the inflow region as much as possible. For another example, 2 robots are transferred from an outflow region to an inflow region, 1 robot is transferred from the inflow region to the outflow region, and such a two-way transfer consumes meaningless resources. Therefore, it needs to prevent transferring a robot from the inflow region to the outflow region. For another example, if 5 robots are deployed in an outflow region, an upper limit of a number of robots transferred to other regions is not more than 5. Therefore, the upper limit of the number of robots transferred to other regions is not more than a number of robots in the outflow region.

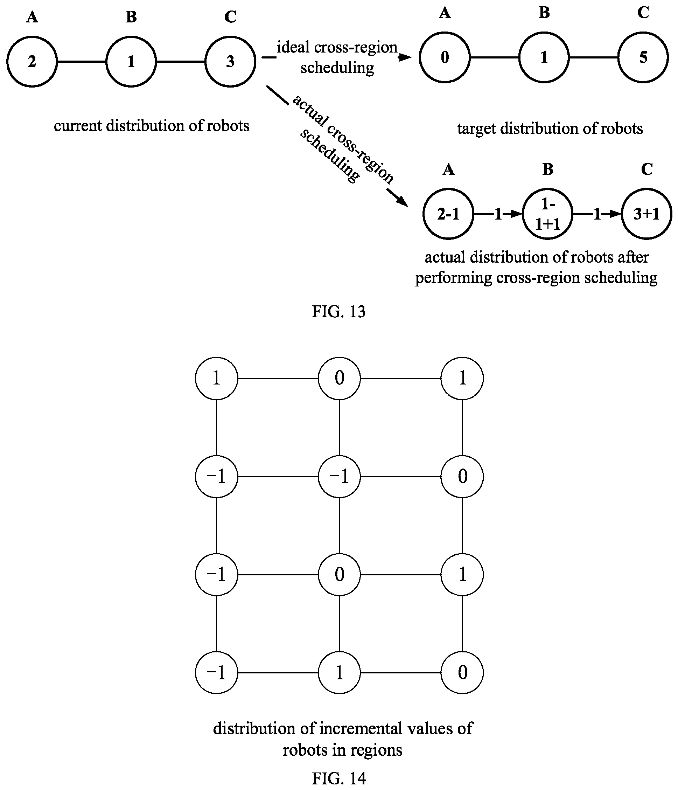

Therefore, under the above constraints, the target distribution of the robots is not necessarily an actual distribution of robots after performing cross-region scheduling, as shown in FIG. 13. FIG. 13 is a schematic diagram illustrating robot scheduling in a robot scheduling method provided in an embodiment of the present invention. Three regions exist in the specified scenario, namely a region A, a region B, and a region C. 2 robots are deployed in the region A, 1 robot is deployed in the region B and 3 robots are deployed in the region C. After performing ideal cross-region scheduling, a target distribution of robots is obtained, that is 0 robots is deployed in the region A, 1 robot is deployed in the region B and 5 robots are deployed in the region C. Actual cross-region scheduling is that 1 robot in the region A is transferred to the region B, and 1 robot in the region B is transferred to the region C. After performing the actual cross-region scheduling, an actual distribution of robots is that 1 robot is deployed in the region A, 1 robot is deployed in the region B and 4 robots are deployed in the region C.

Regarding the above problems, how to determine the cross-region transfer channel from the each outflow region to the inflow region is a problem. In the embodiment of the present invention, the increment values of the outflow regions are acquired, the cross-region transfer channel from the each outflow region to the adjacent inflow region is determined in sequence according to the increment values of the outflow regions from small to large, and for the inflow region where the cross-region transfer channel has not been determined, the cross-region transfer channel from the each outflow region to the inflow region via the transfer region for transferring the robot is determined according to the neighbor relationship between the regions, so as to solve the above problem. The description is as follows. The incremental value of the outflow region represents a number of robots in the outflow region transferred to other regions. A negative increment value represents that the region is an outflow region, a positive increment value represents that the region is an inflow region, the increment value being zero represents that the region is a transfer region or an unscheduled region, and the unscheduled region is a region where no cross-area scheduling of robots occurs.

FIG. 14 is a schematic diagram illustrating a robot increment value in a robot scheduling method provided in an embodiment of the present invention.

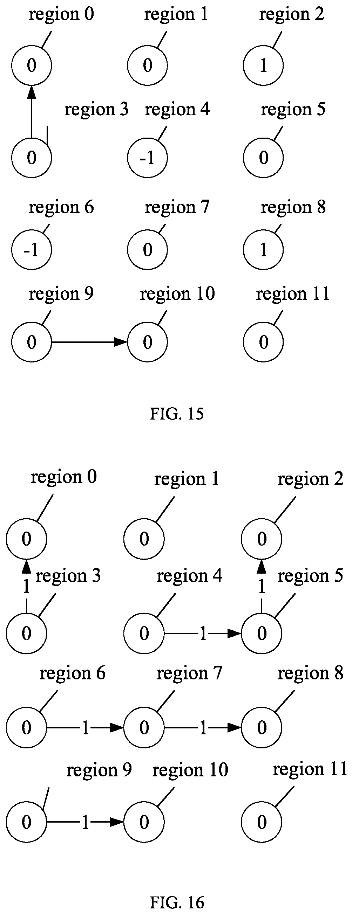

According to the current distribution information about the robots represented by the left figure and the target distribution information about the robots after performing the cross-region scheduling represented by the right figure in FIG. 8, a distribution of incremental values of robots in the regions is obtained, as shown in FIG. 14. A region with an increment value of -1 represents an outflow region, and a number of robots that need to be transferred to other regions is 1. A region with an increment value of 1 represents an inflow region, and a number of robots that need to be transferred from other regions is 1. A region with an increment value of 0 represents a transfer region and a non-scheduling region. The cross-region transfer channel from the each outflow region to the adjacent inflow region is determined in sequence according to the increment values of the outflow regions from small to large, and thus the cross-region transfer channel from the each outflow region to the adjacent inflow region is obtained, as shown in FIG. 15. FIG. 15 is a schematic diagram illustrating another cross-region transfer channel in a robot scheduling method provided in an embodiment of the present invention. A cross-region transfer channel exists between a directly adjacent outflow region and an inflow region. Then, for an inflow region where a cross-region transfer channel has not been determined, a cross-region transfer channel from each outflow region to the inflow region via a transfer region for transferring a robot is determined according to a neighbor relationship between the regions. As shown in FIG. 16, FIG. 16 is a schematic diagram illustrating another cross-region transfer channel in a robot scheduling method provided in an embodiment of the present invention. On the basis of determining the cross-region transfer channel between the adjacent outflow region and the inflow region in FIG. 15, according to the neighbor relationship between the regions, a transfer region is determined from regions with the increment value of 0, so that for the inflow region and outflow region where the cross-region transfer channel have not been determined, and a corresponding cross-region transfer channel is obtained.

A way to determine the cross-region transfer channel from the each outflow region to the inflow region via the transfer region for transferring the robot according to the neighbor relationship between the regions is as follows. According to the neighbor relationship between the regions, a target region adjacent to both the outflow region and the inflow region is determined as the transfer region to obtain the cross-region transfer channel from the each outflow region to the inflow region via the transfer region for transferring the robot. The target region is a region with the increment value of 0.

For example, a region 4 is an outflow region and a region 2 is an inflow region, and target regions (i.e., a region 1 and a region 5) adjacent to the outflow region and inflow region are determined as transfer regions, so as to obtain cross-region transfer channels of region 4 - region 1 - region 2 and region 4 - region 5 - region 2.

The increment values of the outflow regions are acquired. The cross-region transfer channel from the each outflow region to the adjacent inflow region is determined in sequence according to the increment values of the outflow regions from small to large. For the inflow region where the cross-region transfer channel has not been determined, the cross-region transfer channel from the each outflow region to the inflow region via the transfer region for transferring the robot is determined according to the neighbor relationship between the regions. The problem of difficulty in determining the cross-region transfer channel due to difference between the target distribution of the robots and the actual distribution of the robots under a constraint of the specified scenario is solved, which improves applicability of the robot scheduling method and a scheduling efficiency.

Optionally, after determining the cross-region transfer channel from the each outflow region to the inflow region via the transfer region for transferring the robot according to the neighbor relationship between the regions, for the inflow region where the cross-region transfer channel has not been determined, the methods further includes a following step. If a target outflow region with a number of remaining robots greater than a preset number exists, a cross-region transfer channel for randomly transferring a robot from the target outflow region to an adjacent region is determined.

Since the specified scenario is divided into the plurality of regions, there is a problem of uneven division of regions, resulting in an excessive number of robots in some regions. Even through the above-mentioned cross-region scheduling is performed, a number of robots in this regions is still too large, resulting in an insufficient number of robots in other regions, and thus robot resources are not fully utilized. Therefore, it needs to correct the cross-region scheduling policy to obtain a cross-region transfer channel that may solve the above extreme situation.

The remaining robot is a robot in the outflow region except a robot transferred to other regions. The preset number is a preset threshold of the number of remaining robots for the regions. When the number of remaining robots is greater than the preset number, it is determined that the number of remaining robots in the outflow region is still too large, and it needs to perform cross-region scheduling on the remaining robots.

For example, a preset number is 6, a region 1 is an outflow region, 9 robots are deployed in the region 1, 2 robots are transferred to other regions, and a number of the remaining robots is 7, which is greater than the preset number. A cross-region transfer channel for randomly transferring a robot from the region 1 to an adjacent region is determined.

If the target outflow region with the number of remaining robots greater than the preset number exists, the cross-region transfer channel for randomly transferring the robot from the target outflow region to the adjacent region is determined, so that there are not too many remaining robots in the target outflow region, thus improving an utilization efficiency of the robot resources in the specified scenario and improving a scheduling efficiency.

Optionally, before performing the cross-region scheduling on the target robot in the specified scenario by using the robot cross-region scheduling policy, the method further includes a following step. A target robot to be scheduled is determined according to the robot cross-region scheduling policy and a preset constraint.

In fact, in an actual application of the specified scenario, an urgency of the task to be executed shall be considered in addition to the number of robots in the regions. In the above-mentioned embodiments, in a stage of determining the cross-region scheduling policy, constraints that need to be considered are limited to ensure an efficiency of determining the cross-region scheduling policy. However, in a stage of performing cross-region scheduling, more practical preset constraints may be added, for example, setting an overall evaluation time for all robots and considering whether a robot needs to be scheduled only within the evaluation time, or setting an individual evaluation time for each robot and performing scheduling on a robot only within the individual evaluation time after entering an inflow region, to prevent the robot being transferred to other inflow regions without completing enough tasks to be executed after being transferred to the inflow region, which may consume too much transfer time and affect an execution efficiency of a task to be executed. A total number of scheduled robots is limited. The more constraints there are, the greater difference between the actual distribution information about robots after performing cross-region scheduling and the target distribution information about robots. This requires that the constraint needs to be pre-targeted and balanced, so as to achieve an ideal cross-region scheduling effect, so that the robot resources in the specified scenario are reasonably assigned and the tasks to be executed are executed efficiently.

The preset constraint is a constraint on robot scheduling set according to the actual application of the specified scenario, including a limit on a number of robots that may be scheduled across regions, and a limit on a time of robots in regions that may be scheduled across regions, etc.

A way to determine the target robot to be scheduled according to the robot cross-region scheduling policy and the preset constraint is as follows. A robot in the outflow region is determined according to the robot cross-region scheduling policy, and a target robot to be scheduled is determined from the robot in the outflow region according to the preset constraint.

For example, the constraint is that a number of robots to be scheduled across regions is 2. The outflow region is determined according to the robot cross-region scheduling policy (i.e., region 1 - region 2 - region 3). 8 robots exist in the outflow region (region 1), and 2 target robots to be scheduled are determined from the 8 robots in the outflow region (region 1) according to the preset constraint.

The target robot to be scheduled is determined according to the robot cross-region scheduling policy and the preset constraint. Thus, subsequent cross-region scheduling may be more suitable for the actual application of the specified scenario, which not only improves an execution efficiency of a task, but also improves applicability of the robot scheduling method.

Optionally, step S202 includes following steps. A total number of tasks to be executed in the specified scenario, a total number of robots, a total number of tasks to be executed in regions and current distribution information about robots in the regions are counted. The global average number of tasks to be executed in the specified scenario is calculated according to the total number of tasks to be executed in the specified scenario and the total number of robots. The local average number of tasks to be executed in the regions is calculated respectively according to the total number of tasks to be executed and the current distribution information about the robots in the regions.

The total number of tasks to be executed in the specified scenario is a total number of tasks to be executed generated in the specified scenario. The total number of robots in the specified scenario is a total number of robots deployed in the regions of the specified scenario. The total number of tasks to be executed in the regions is a total number of tasks to be executed generated in the regions. The current distribution information about the robots in the regions is distribution information about a current distribution of robots in the regions, including a current number of robots in the regions.

A way to calculate the global average number of tasks to be executed in the specified scenario according to the total number of tasks to be executed in the specified scenario and the total number of robots is as follows. The total number of tasks to be executed in the specified scenario is divided by the total number of robots to obtain the global average number of tasks to be executed in the specified scenario.

A way to calculate the local average number of tasks to be executed in the regions, respectively, according to the total number of tasks to be executed and the current distribution information about the robots in the regions is as follows. The total number of tasks to be executed in the regions is divided by the current number of robots in the regions to obtain the local average number of tasks to be executed in the regions.

For example, a total number of tasks to be executed in a specified scenario is 2,000, a total number of robots is 25, and 10 regions exist in the specified scenarios, namely a region 1, a region 2 ... a region 10. A total number of tasks to be executed in the regions is respectively as follows: a total number of tasks to be executed in the region 1 is 200; a total number of tasks to be executed in the region 2 is 300; ...; and a total number of tasks to be executed in the region 10 is 700. A current number of robots in the regions is respectively as follows: a current number of robots in the region 1 is 1; a current number of robots in the region 2 is 2; ...; and a current number of robots in the region 3 is 3. The total number of tasks to be executed in the specified scenario of 2,000 is divided by the total number of robots of 25 to obtain a global average number of tasks to be executed in the specified scenario of 80. For the region 2, the total number of tasks to be executed in the region 2 of 300 is divided by the current number of robots in the region 2 of 2 to obtain a local average number of tasks to be executed in the region 2 of 150.

The total number of tasks to be executed in the specified scenario, the total number of robots, the total number of tasks to be executed in regions and the current distribution information about robots in the regions are counted. The global average number of tasks to be executed in the specified scenario is calculated according to the total number of tasks to be executed in the specified scenario and the total number of robots. The local average number of tasks to be executed in the regions is calculated respectively according to the total number of tasks to be executed and the current distribution information about the robots in the regions. More accurate global average number of tasks to be executed and local average number of tasks to be executed are obtained, which lays a more accurate data foundation for the subsequent prediction of a global task execution loss of the specified scenario.

Optionally, counting the total number of tasks to be executed in the specified scenario and the total number of tasks to be executed in the regions includes following steps. Attribute information about tasks to be executed in the specified scenario is acquired. A quantity coefficient of the task to be executed is determined according to the attribute information about the task to be executed. The total number of tasks to be executed in the specified scenario and the total number of tasks to be executed in the regions are counted according to the quantity coefficient of the task to be executed.

Since a task to be executed generally has an execution priority when it is executed, it needs to determine the quantity coefficient of the task to be executed according to the attribute information about the task to be executed. When the cross-region scheduling policy is determined later, the total number of tasks to be executed in the regions is corrected, so that this region is given priority to perform cross-region scheduling on robots, ensuring that the tasks to be executed with a higher priority may be executed preferentially.

The attribute information about the task to be executed is information that represents attribute characteristics of the task to be executed. For example, if a task to be executed is a handling task of first aid supplies, which has a highest execution priority, attribute information about the task to be executed is "handling task - first aid supplies".

The quantity coefficient of the task to be executed is a preset quantity coefficient according to an execution priority of the tasks to be executed, and may be a multi-level quantity coefficient. For example, a quantity coefficient of a task to be executed having a highest execution priority is2, a quantity coefficient of a task to be executed having a high execution priority is 1.5, and a quantity coefficient of a task to be executed having a medium execution priority is 1.

A way to determine the quantity coefficient of the task to be executed according to the attribute information about the task to be executed is as follows. An execution priority of the task to be executed is determined according to the attribute information about the task to be executed, and the quantity coefficient of the task to be executed is determined according to the execution priority of the task to be executed.

For example, attribute information about a task to be executed in a specified scenario is acquired, that is, attribute information about a task 1 is "handling task - first aid supplies;" attribute information about a task 2 is "handling task - food" ... and attribute information about a task 2,000 is "handling task - household goods". According to the attribute information about the task to be executed, an execution priority of the task to be executed is determined, that is, an execution priority of the task 1 is highest, an execution priority of the task 2 is medium ... and an execution priority of the task 2,000 is medium. According to the execution priority of the task to be executed, a quantity coefficient of the task to be executed is determined, that is, a quantity coefficient of the task 1 is 2, a quantity coefficient of the task 2 is 1 ... and a quantity coefficient of the task 2,000 is 1. A total number of tasks to be executed in the specified scenario and a total number of tasks to be executed in the regions are counted according to the quantity coefficient of the task to be executed.

The attribute information about the task to be executed in the specified scenario is acquired. The quantity coefficient of the task to be executed is determined according to the attribute information about the task to be executed. The total number of tasks to be executed in the specified scenario and the total number of tasks to be executed in the regions are counted according to the quantity coefficient of the task to be executed. According to the attribute information about the task to be executed, the total number of tasks to be executed in the specified scenario and the total number of tasks to be executed in the regions are counted, which prevents an unified statistics of the tasks to be executed, eliminates particularity of the tasks to be executed, and prevents that a region where a task to be executed with a high execution priority is located does not have a robot that is correspondingly scheduled across regions, which reduces the execution efficiency of the tasks to be executed.

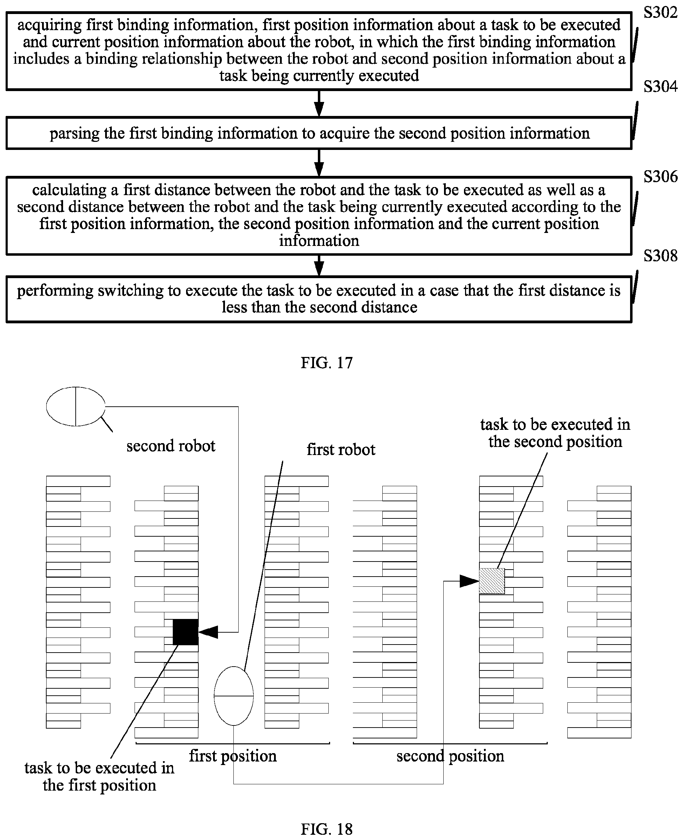

Optionally, after step S208, FIG. 17 is a flow chart showing a task execution method in another robot scheduling method provided in an embodiment of the present invention. As shown in FIG. 17, the method includes steps as follows.

In step S302, first binding information, first position information about a task to be executed and current position information about the robot are acquired. The first binding information includes a binding relationship between the robot and second position information about a task being currently executed.

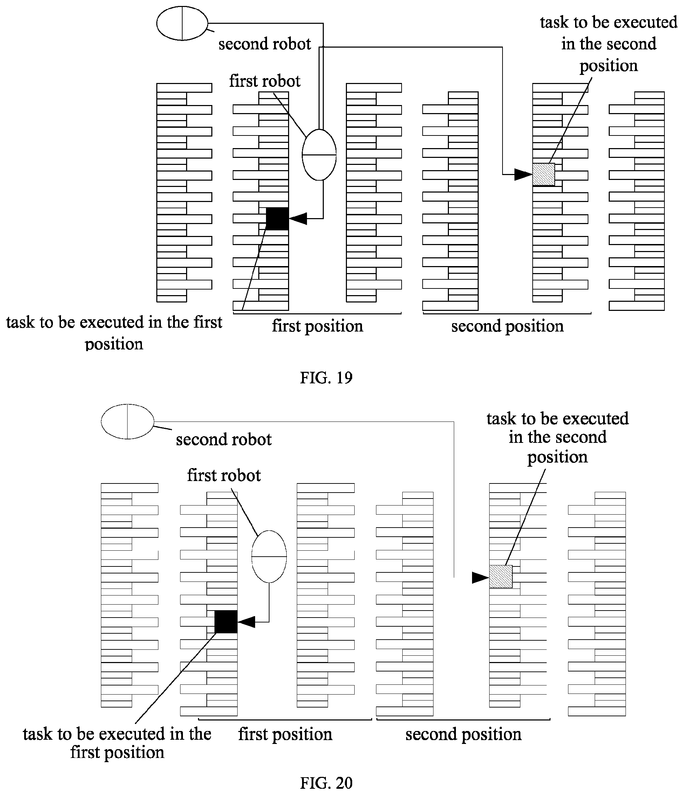

An executor of the embodiment of the present invention is a robot, and an application scenario is a specified scenario including a plurality of regions. In the embodiment of the present invention, the robot is scheduled to execute a task according to a number of tasks generated in the regions of the specified scenario. For robot scheduling within the region, the robot needs to be bound to a position within the region, and then further execute a task to be executed at that position. However, when such a robot is bound to the position and then executes the task to be executed, a following phenomenon is prone to occur, as shown in FIG. 18. FIG. 18 is a schematic diagram illustrating robot remote scheduling in the prior art. A first robot is at a current first position, and there is no task to be executed in the first position. It is determined that a task to be executed in a second position needs to be executed, and the first robot is bound to the second position. The first robot starts to go to the second position along a motion path to execute the task to be executed. At this time, the first position generates a task to be executed, and a second robot is scheduled from a long distance and bound to the first position to execute the task to be executed in the first position. On this basis, a following phenomenon may occur, as shown in FIG. 19. FIG. 19 is a schematic diagram illustrating robot deadlock in the prior art. A first robot is at a current first position, it is determined that a task to be executed in a second position needs to be executed, and the first robot is bound to the second position. The first robot starts to go to the second position along a motion path to execute the task to be executed. In a process of moving the first robot, the first position generates a task to be executed and is bound to a second robot. The second robot starts to move to the first position along a motion path to execute the task to be executed. The previous first robot has not left the first position, causing the two robots to deadlock after the second robot enters the first position. The above two phenomena seriously affect an execution efficiency of a task to be executed and increase an execution cost of the tasks to be executed.

The task being currently executed is the task at the second position currently bound to the robot. The task to be executed is the task at the first position. The first position and the second position are two different positions within the regions of the specified scenario, and may be a position, such as a lane, a shelf, a sorting station, a dining table, a kitchen, and the like, and are not limited thereto.

The first binding information is information that represents the binding relationship between the robot and the second position information, including relevant information about the robot and the second position information. The relevant information about the robot is information that represents a relevant attribute of the robot, including an identifier of the robot, a motion parameter of the robot, and a task execution parameter of the robot, etc. The second position information is information about the second position where the task being currently executed is located, which may be coordinates of the second position or an identifier of the second position, which is not limited therein. The first position information about the task to be executed is information about the first position where the task to be executed is located, which may be coordinates of the first position or an identifier of the first position, which is not limited therein. The current position information about the robot is information about a current position of the robot, which may be coordinates of the current position or an identifier of the current position, which is not limited therein.

A way to acquire the first binding information, the first position information about the task to be executed and the current position information about the robot is as follows. The first binding information, the first position information about the task to be executed and the current position information about the robot are acquired from the robot scheduling terminal.

For example, the first binding information {coordinates of the second position (100, 60)}, the first position information about the task to be executed {coordinates of the first position (180, 60)} and the current position information about the robot {coordinates of the current position (150, 90)} are acquired from the robot scheduling terminal.

The first binding information is acquired, laying a foundation for subsequent parse to obtain the second position information. The first position information about the task to be executed and the current position information about the robot are acquired, providing reference information for subsequent calculation of a first distance and a second distance.

In step S304, the first binding information is parsed to acquire the second position information.

A way to parse the first binding information to acquire the second position information is as follows. The first binding information is parsed by using a preset parsing algorithm to obtain the second position information. The preset parsing algorithm may be a keyword retrieval algorithm, a coordinate parsing algorithm, etc.

For example, the first binding information is parsed by using a preset coordinate parsing algorithm to obtain the second position information {coordinates of the second position (100, 60)}.

The second position information is acquired by parsing the first binding information, providing reference information for subsequent calculation of a first distance and a second distance.

In step S306, a first distance between the robot and the task to be executed as well as a second distance between the robot and the task being currently executed are calculated according to the first position information, the second position information and the current position information.

A way to calculate the first distance between the robot and the task to be executed as well as the second distance between the robot and the task being currently executed according to the first position information, the second position information and the current position information is as follows. Coordinates of the first position and the current position are determined according to the first position information and the current position information, and a difference between the coordinates is calculated as the first distance between the robot and the task to be executed. Coordinates of the second position and the current position are determined according to the second position information and the current position information, and a difference between the coordinates is calculated as the second distance between the robot and the task being currently executed.

For example, coordinates of the first position (180,60) and coordinates of the current position (150, 90) are determined according to the first position information and the current position information, and a difference between the coordinates of the first position and the coordinates of the current position is calculated to be $30\sqrt{2}$ as the first distance between the robot and the task to be executed. Coordinates of the second position (100,60) and coordinates of the current position (150,90) are determined according to the second position information and the current position information, and a difference between the coordinates of the second position and the coordinates of the current position is calculated to be $10\sqrt{34}$ as the second distance between the robot and the task to be executed.

In step S308, switching is performed to execute the task to be executed in a case that the first distance is less than the second distance.

A way to perform the switching to execute the task to be executed in the case that the first distance is less than the second distance is as follows. In the case that the first distance is less than the second distance, bound second position information about the task being currently executed is switched to the first position information about the task to be executed, and the task to be executed is executed.

For example, a first distance of $30\sqrt{2}$ is smaller than a second distance of $10\sqrt{34}$, bound second position information about a task being currently executed is switched to first position information about a task to be executed, and the task to be executed is executed at the first position.

Optionally, after performing the switching to execute the task to be executed, the method further includes a following step. The robot is bound to the task to be executed, and the first binding information is updated according to a binding result.

In the embodiment of the present invention, the first binding information, the first position information about the task to be executed and the current position information about the robot are acquired. The first binding information includes the binding relationship between the robot and the second position information about the task being currently executed. The first binding information is parsed to acquire the second position information. The first distance between the robot and the task to be executed as well as the second distance between the robot and the task being currently executed are calculated according to the first position information, the second position information and the current position information. The switching is performed to execute the task to be executed in the case that the first distance is less than the second distance. By comparing the first distance between the robot and the task to be executed with the second distance between the robot and the task being currently executed, in the case that the first distance is less than the second distance, the task being currently executed is unbound and the task to be executed is rebound. A task to be executed with a shorter distance is executed preferentially, thus preventing a problem of deadlock caused by performing long-distance scheduling on other robot, which improves an execution efficiency of the task to be executed and reduces an execution cost of the task to be executed.

Optionally, acquiring the current position information about the robot in step S302 includes following steps. Second binding information is acquired. The second binding information includes a binding relationship between the robot and current position information about the robot. The second binding information is parsed to acquire the current position information.

The second binding information is information that represents the binding relationship between the robot and the current position information, including relevant information about the robot and the current position information. The relevant information about the robot is information that represents a relevant attribute of the robot, including an identifier of the robot, a motion parameter of the robot, and a task execution parameter of the robot, etc. The current position information about the robot is information about a current position of the robot, which may be coordinates of the current position and may also be an identifier of the current position, and is not limited herein.

A way to acquire the second binding information is as follows. The second binding information is acquired from the robot scheduling terminal.

A way to parse the second binding information to acquire the current position information is as follows. The first binding information is parsed by using a preset parsing algorithm to acquire the second position information. The preset parsing algorithm may be a keyword retrieval algorithm, a coordinate parsing algorithm, etc.

For example, the second binding information is acquired from the robot scheduling terminal, and the first binding information is parsed by using a preset keyword retrieval algorithm to acquire the second position information {an identifier of the second position "A3 shelf"}.

The second binding information is acquired, in which the second binding information includes the binding relationship between the robot and current position information about the robot, and the second binding information is parsed to acquire the current position information, providing reference information for subsequent calculation of the first distance and the second distance.

Optionally, the method further includes following steps. It is identified whether current position information about the robot changes. If the current position information changes, the second binding information is unbound, and the robot and changed current position information are rebound to acquire updated second binding information.

When a robot leaves a certain position in the region, the robot needs to be unbound from the second binding information before it may be bound to other position information.

For example, when a current position of the robot changes from (150, 90) to (120, 90), it is identified that the current position information about the robot has changed, the second binding information is unbound, and the robot and changed current position information (120, 90) are rebound to acquire updated second binding information {current position information (120, 90)}.

It is identified whether the current position information about the robot changes. If the current position information changes, the second binding information is unbound, and the robot and the changed current position information are rebound to acquire the updated second binding information. By unbinding the second binding information and performing rebinding according to the changed current position information, accuracy of a calculated first distance and a calculated second distance is ensured, providing data support for accurately switching the tasks to be executed and ensuring an execution efficiency of the task to be executed.

Optionally, the first position information is a first lane identifier where the task to be executed is located, the second position information is a second lane identifier where the task being currently executed is located, and the current position information is a third lane identifier where the robot is located. Correspondingly, step S306 includes following steps. The first distance between the robot and the task to be executed is calculated according to the first lane identifier and the third lane identifier. The second distance between the robot and the task being currently executed is calculated according to the second lane identifier and the third lane identifier.

The first lane identifier is an identifier of a first lane where the task to be executed is located, the second lane identifier is an identifier of a second lane where the task being currently executed is located, and the third lane identifier is an identifier of a third lane where the robot is located.

A way to calculate the first distance between the robot and the task to be executed according to the first lane identifier and the third lane identifier is as follows. A distance between the first lane and third lane is determined according to the first lane identifier and third lane identifier, and the first distance between the robot and the task to be executed is calculated according to the distance between the first lane and third lane.

A way to calculate the second distance between the robot and the task being currently executed according to the second lane identifier and the third lane identifier is as follows. A distance between the second lane and the third lane is determined according to the second lane identifier and the third lane identifier, and the second distance between the robot and the task to be executed is calculated according to the distance between the second lane and the third lane.

For example, a distance between the first lane and the third lane is determined to be 20 according to the first lane identifier and the third lane identifier, and a first distance between the robot and the task to be executed is calculated to be 20 according to the distance between the first lane and the third lane identifier of 20. A distance between the second lane and the third lane is determined to be 30 and a second distance between the robot and the task to be executed is calculated to be 30 according to the distance between the second lane and the third lane of 30.

The first distance between the robot and the task to be executed is calculated according to the first lane identifier and the third lane identifier. The second distance between the robot and the task being currently executed is calculated according to the second lane identifier and the third lane identifier. For a position in a form of the lane, the first distance and the second distance are calculated by the lane identifier. In the case that the first distance is less than the second distance, the task being currently executed may be unbound, and the task to be executed is rebound. The task to be executed with a shorter distance is executed preferentially, thus preventing a problem of deadlock caused by performing long-distance scheduling on other robot, which improves an execution efficiency of the task to be executed in the lane and reduces an execution cost of the task to be executed in the lane.

Optionally, step S308 includes following steps. It is identified whether the first lane identifier and the third lane identifier are the same in the case that the first distance is less than the second distance. The switching is performed to execute the task to be executed in a case that the first lane identifier is the same as the third lane identifier.

In the embodiment of the present invention, the first position and the second position are in a form of lane. For problems of long-distance scheduling and deadlock caused by binding the robot with the first lane or the second lane only once in FIGS. 18 and 19, a lane double binding mechanism may actually be used to solve the above-mentioned problems. The double binding mechanism is that when the robot is assigned to a lane, pre-binding (binding with a first lane identifier of the task being currently executed) and actual binding (prioritized binding a lane identifier with a short distance) are adopted.

FIG. 20 is a schematic diagram illustrating lane task execution in a robot scheduling method provided in an embodiment of the present invention.

For the first robot at the first position (the first lane) in FIG. 19, since the first robot is assigned a task in the second position (the second lane), the first robot is bound to the second position (the second lane) identifier of the task being currently executed. However, a position of the first robot is the first position (the first lane) where the task to be executed is located, and the first robot is actually bound to the first position (the first lane) identifier. Therefore, as long as a task to be executed is generated in the first position (the first lane), the task to be executed may be assigned to the first robot for execution. For the actual binding, as long as a robot is in a lane cell, that is, the first position (the first lane) and the third lane are a same lane, the first position (the first lane) identifier and the robot are actually bound. Only when the robot moves out of the first position (the first lane) may the first position (the first lane) identifier and the first robot be actually unbound. Through the above mechanism, when a task is assigned to the robot, the robot is unbound from a pre-bound second position (second lane) identifier and is rebound to the first position (first lane) identifier. In simple terms, when the first robot does not actually move out of a current lane, the first robot may find a task to be executed generated in the third lane, i.e., in the first position (the first lane) where the first robot is located, and the first robot may be unbound from a preset second position (the second lane) identifier, and preferentially execute the task to be executed in the first position (the first lane), thus reducing a possibility of deadlock.

Corresponding to FIG. 20, through the above mechanism, the second position (second lane) identifier is bound from the first robot. However, the first robot is in the first lane, that is, the first lane and the third lane are a same lane, and the first lane identifier is the same as the third lane identifier, and the first distance must be less than the second distance. Therefore, before the first robot leaves the first position (the first lane), the first position (the first lane) generates the task to be executed, the first robot is bound to the first position (the first lane) identifier preferentially, and the second position (the second lane) identifier may be bound to another second robot, thus preventing the deadlock between the second robot and the first robot after the second robot enters the first position (the first lane).

It is identified whether the first lane identifier and the third lane identifier are the same in the case that the first distance is less than the second distance. The switching is performed to execute the task to be executed in the case that the first lane identifier is the same as the third lane identifier. The deadlock in the lane is prevented, an execution efficiency of a task to be executed in the lane is improved, and an execution loss of the task to be executed in the lane is reduced.

Optionally, before performing the switching to execute the task to be executed in step S308, the method further includes a following steps. It is determined whether the task being currently executed is a cross-region task in the specified scenario according to the current position information and the second position information. The specified scenario is divided into the plurality of regions in advance. Correspondingly, performing the switching to execute the task to be executed includes a following step. The switching is performed to execute the task to be executed in a case that the task being currently executed is not the cross-region task.

Since an application scenario of this solution is the task execution within the specified scenario region, it needs to prevent scheduling robots to execute other tasks to be executed outside this region, which reduces an execution efficiency of a task to be executed and increases an execution cost of the task to be executed.

A way to determine whether the task being currently executed is the cross-region task in the specified scenario according to the current position information and the second position information is as follows. According to the current position information and the second position information, it is determined whether the current position and the second position are in a same region, and it is determined whether the task being currently executed is the cross-region task in the specified scenario.

For example, a plurality of regions exist in the specified scenario, and a region includes 20 positions (position 1 to position 20). According to current position information (a current position identifier of "position 1") and second position information (a second position identifier of "position 2"), by identifying that the "position 1" and the "position 2" are in a same region, it is determined that the current position and the second position are in a same region, it is determined that the task being currently executed is not the cross-region task in the specified scenario, and the switching is performed to execute the task to be executed.

It is determined whether the task being currently executed is the cross-region task in the specified scenario according to the current position information and the second position information. The specified scenario is divided into the plurality of regions in advance. The switching is performed to execute the task to be executed in the case that the task being currently executed is not the cross-region task. An execution efficiency and an execution cost of the task to be executed are ensured.

Optionally, after determining whether the task being currently executed is the cross-region task in the specified scenario according to the current position information and the second position information, the method further includes a following step. The task being currently executed continues to be executed in a case that the task being currently executed is the cross-region task.

For example, a plurality of regions exist in the specified scenario, and a region includes 20 positions (position 1 to position 20). According to current position information (a current position identifier of "position 1") and second position information (a second position identifier of "position 109"), by identifying that the "position 1" and the "position 109" are not in a same region, it is determined that the current position and the second position are not in a same region, it is determined that the task being currently executed is the cross-region task in the specified scenario, and the switching is performed to execute the task to be executed.

It is determined whether the task being currently executed is the cross-region task in the specified scenario according to the current position information and the second position information. The specified scenario is divided into the plurality of regions in advance. The task being currently executed continues to be executed in the case that the task being currently executed is the cross-region task. An execution efficiency and an execution cost of the task to be executed are ensured.

Optionally, before performing the switching to execute the task to be executed in step S308, the method further includes a following step. A number of switching times corresponding to the task being currently executed is acquired. The number of switching times is a statistical result of a historical number of switching times of the task being currently executed. Performing the switching to execute the task to be executed includes switching to execute the task to be executed in a case that the number of switching times is less than or equal to a preset times threshold.

Since the above-mentioned double binding mechanism and rebinding tend to make the robot already in the first position or the second position stay in the current position for a long time to complete a task to be executed generated in the first position or the second position, a scheduling distance of the robot is relatively close, resulting in a task to be executed that is farther away not being executed by the robot. In order to prevent this phenomenon, it needs to acquire the statistical result of the historical number of switching times of the task being currently executed. The statistical result of the historical number of switching times of the task being currently executed is compared with the preset times threshold. In a case that the statistical result of the historical number of switching times of the task being currently executed is greater than the preset times threshold, the task being currently executed continues to be executed, and in a case that the first distance is less than a preset distance threshold, the number of switching times is reset, thus ensuring that the tasks to be executed that is farther away may also be executed by the robot.

A way to acquire the number of switching times corresponding to the task being currently executed is as follows. The number of switching times corresponding to the task being currently executed recorded by the robot itself may be acquired, and the number of switching times corresponding to the task being currently executed may also be acquired from the robot scheduling terminal, which is not limited herein.

For example, a number of switching times corresponding to the task being currently executed recorded by the robot itself is acquired to be 5, a preset times threshold is 10, the switching times of 5 are less than the preset times threshold of 10, and the switching is performed to execute the task to be executed.

The number of switching times corresponding to the task being currently executed is acquired. The number of switching times is the statistical result of the historical number of switching times of the task being currently executed. The switching is performed to execute the task to be executed in the case that the number of switching times is less than or equal to the preset times threshold, ensuring that the robot may preferentially execute the task to be executed which is close to the current position, improving an execution efficiency of the task to be executed and reducing an execution cost of the task to be executed.

Optionally, after acquiring the number of switching times corresponding to the task being currently executed, the method further includes a following step. The task being currently executed continues to be executed in a case that the number of switching times is greater than the preset times threshold, and the number of switching times is reset in a case that the first distance is less than a preset distance threshold.

For example, a number of switching times corresponding to the task being currently executed recorded by the robot itself is acquired to be 11, a preset times threshold is 10, and the number of switching times of 11 is greater than the preset times threshold of 10, and the task being currently executed continues to be executed, and the number of switching times of 11 is reset in the case that the first distance is less than the preset distance threshold.

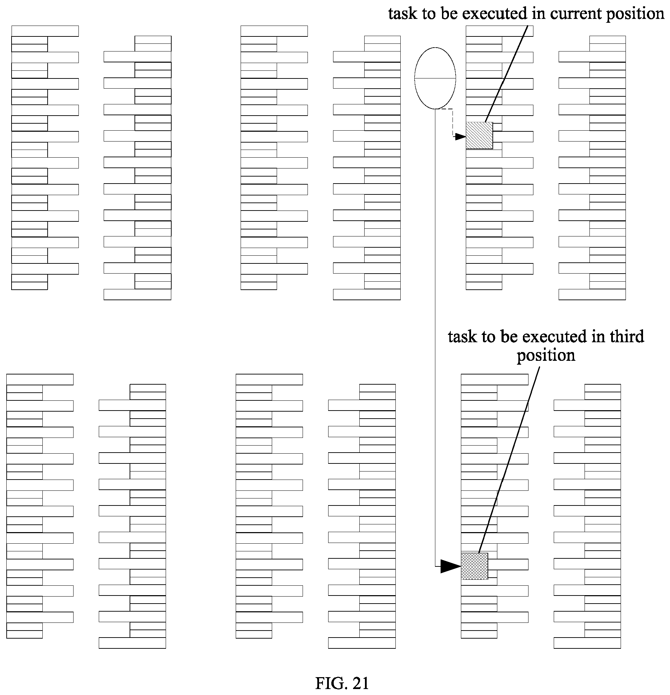

FIG. 21 is a schematic diagram illustrating a method for switching a task to be executed in a robot scheduling method provided in an embodiment of the present invention. As shown in FIG. 21, the third position that is far away generates a task to be executed, and the robot is bound to the third position information and needs to execute the task to be executed in the third position. In the case that the number of switching times is greater than the preset times threshold, the task to be executed in the third position continues to be executed without performing switching to execute a task to be executed in the current position.

The number of switching times corresponding to the task being currently executed is acquired. The number of switching times is the statistical result of the historical number of switching times of the task being currently executed. The switching is performed to execute the task to be executed in the case that the number of switching times is less than or equal to a preset times threshold, ensuring that the robot may preferentially execute the task to be executed which is close to the current position, and ensuring an execution efficiency of the task to be executed and an execution cost of the task to be executed.

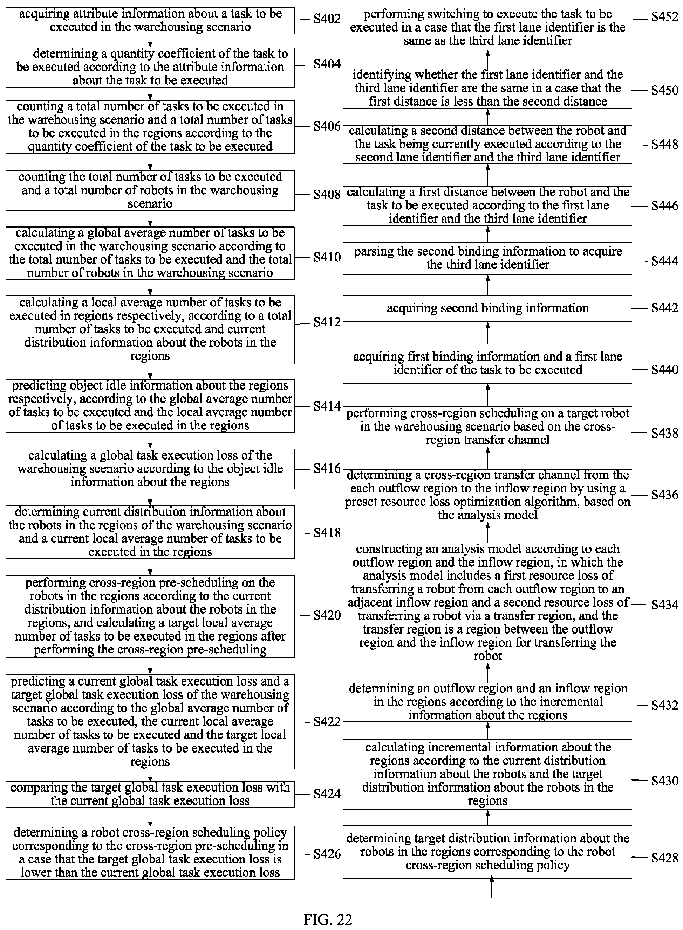

The robot scheduling method will be further described below with reference to FIG. 22 by taking the robot scheduling method provided in the present invention applied to a warehousing scenario as an example. FIG. 22 is a flow chart showing a robot scheduling method applied to a warehousing scenario provided in an embodiment of the present invention. The method includes following steps.

In step S402, attribute information about a task to be executed in the warehousing scenario is acquired.

In step S404, a quantity coefficient of the task to be executed is determined according to the attribute information about the task to be executed.

In step S406, a total number of tasks to be executed in the warehousing scenario and a total number of tasks to be executed in the regions are counted according to the quantity coefficient of the task to be executed.

In step S408, the total number of tasks to be executed and a total number of robots in the warehousing scenario are counted.

In step S410, a global average number of tasks to be executed in the warehousing scenario is calculated according to the total number of tasks to be executed and the total number of robots in the warehousing scenario.

In step S412, according to a total number of tasks to be executed and current distribution information about the robots in the regions, a local average number of tasks to be executed in regions is calculated respectively.

In step S414, according to the global average number of tasks to be executed and the local average number of tasks to be executed in the regions, object idle information about the regions is predicted respectively.

In step S416, a global task execution loss of the warehousing scenario is calculated according to the object idle information about the regions.

In step S418, current distribution information about the robots in the regions of the warehousing scenario and a current local average number of tasks to be executed in the regions are determined.

In step S420, cross-region pre-scheduling is performed on the robots in the regions according to the current distribution information about the robots in the regions, and a target local average number of tasks to be executed in the regions after performing the cross-region pre-scheduling is calculated.

In step S422, a current global task execution loss and a target global task execution loss of the warehousing scenario are predicted according to the global average number of tasks to be executed, the current local average number of tasks to be executed and the target local average number of tasks to be executed in the regions.

In step S424, the target global task execution loss is compared with the current global task execution loss.

In step S426, a robot cross-region scheduling policy corresponding to the cross-region pre-scheduling is determined in a case that the target global task execution loss is lower than the current global task execution loss.

In step S428, target distribution information about the robots in the regions corresponding to the robot cross-region scheduling policy is determined.

In step S430, incremental information about the regions is calculated according to the current distribution information about the robots and the target distribution information about the robots in the regions.

In step S432, an outflow region and an inflow region in the regions are determined according to the incremental information about the regions.

In step S434, an analysis model is constructed according to the outflow regions and the inflow regions. The analysis model includes a first resource loss of transferring a robot from each outflow region to an adjacent inflow region and a second resource loss of transferring a robot via a transfer region, and the transfer region is a region between the outflow region and the inflow region for transferring the robot.

In step S436, a cross-region transfer channel from each outflow region to the inflow region is determined by using a preset resource loss optimization algorithm, based on the analysis model.

In step S438, cross-region scheduling is performed on a target robot in the warehousing scenario based on the cross-region transfer channel.

In step S440, first binding information and a first lane identifier of the task to be executed are acquired. The first binding information includes a binding relationship between the robot and a second lane identifier of a task being currently executed.

In step S442, second binding information is acquired. The second binding information includes a binding relationship between the robot and a third lane identifier of the robot.

In step S444, the second binding information is parsed to acquire the third lane identifier.

In step S446, a first distance between the robot and the task to be executed is calculated according to the first lane identifier and the third lane identifier.

In step S448, a second distance between the robot and the task being currently executed is calculated according to the second lane identifier and the third lane identifier.

In step S450, it is identified whether the first lane identifier and the third lane identifier are the same in a case that the first distance is less than the second distance.

In step S452, switching is performed to execute the task to be executed in a case that the first lane identifier is the same as the third lane identifier.

According to the embodiment of the present invention, the global task execution loss of the specified scenario is predicted according to the global average number of tasks to be executed and the local average task amount to be executed, a loss value when a task to be executed is executed by a robot under a current assignment of the tasks to be executed in the regions is obtained. The loss value is then taken as reference data, and a corresponding robot cross-region scheduling policy is obtained by taking a more ideal distribution of the robots in the regions as a goal, thus making full use of robot quantity resources and improving an execution efficiency of a task. The first distance between the robot and the task to be executed is compared with the second distance between the robot and the task being currently executed. In the case that the first distance is less than the second distance, the task being currently executed is unbound, and the task to be executed is rebound. A task to be executed with a shorter distance is executed preferentially, thus preventing a problem of deadlock caused by performing long-distance scheduling on other robot, which improves an execution efficiency of the task to be executed and reduces an execution cost of the task to be executed.

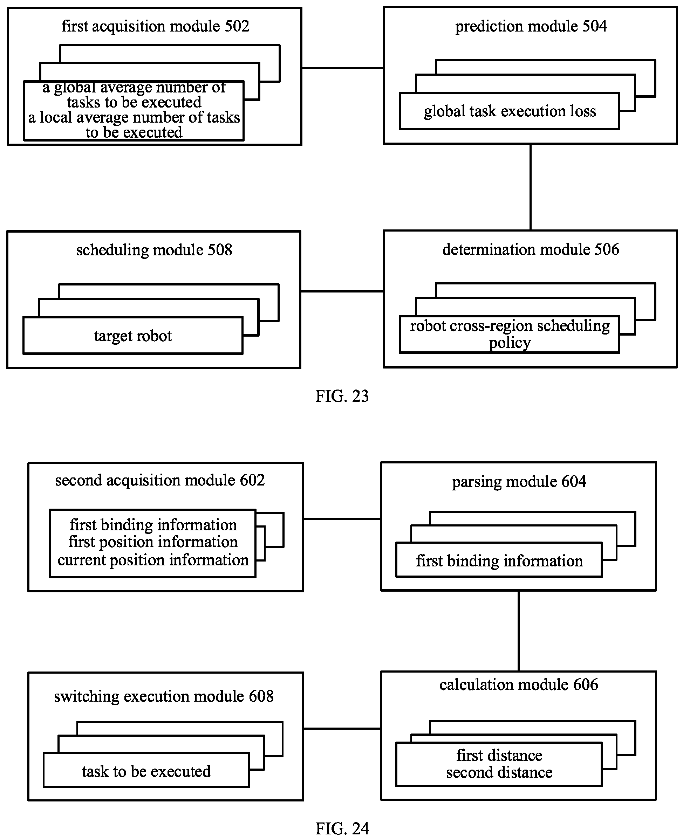

Corresponding to the above method embodiment, the present invention also provides a robot scheduling device embodiment. FIG. 23 is a schematic diagram illustrating a robot scheduling device provided in an embodiment of the present invention. As shown in FIG. 23, the device includes a first acquisition module 502, a prediction module 504, a determination module 506, and a scheduling module 508. The first acquisition module 502 is configured to acquire a global average number of tasks to be executed in a specified scenario and a local average number of tasks to be executed in regions. The specified scenario is divided into a plurality of regions in advance. The prediction module 504 is configured to predict a global task execution loss of the specified scenario according to the global average number of tasks to be executed and the local average number of tasks to be executed in the regions. The determination module 506 is configured to determine a robot cross-region scheduling policy according to the global task execution loss. The scheduling module 508 is configured to perform cross-region scheduling on a target robot in the specified scenario by using the robot cross-region scheduling policy.

Optionally, the prediction module 504 is further configured to predict object idle information about the regions, respectively, according to the global average number of tasks to be executed and the local average number of tasks to be executed in the regions, and calculate the global task execution loss of the specified scenario according to the object idle information about the regions.

Optionally, the determination module 506 is further configured to determine the robot cross-region scheduling policy with the global task execution loss as an optimization goal.

Optionally, the determination module 506 is further configured to determine current distribution information about robots in the regions of the specified scenario and a current local average number of tasks to be executed in the regions, perform cross-region pre-scheduling on the robots in the regions according to the current distribution information about the robots in the regions, and calculate a target local average number of tasks to be executed in the regions after performing the cross-region pre-scheduling, predict a current global task execution loss and a target global task execution loss of the specified scenario according to the global average number of tasks to be executed, the current local average number of tasks to be executed and the target local average number of tasks to be executed in the regions, compare the target global task execution loss with the current global task execution loss, and determine a robot cross-region scheduling policy corresponding to the cross-region pre-scheduling in a case that the target global task execution loss is lower than the current global task execution loss.

Optionally, the scheduling module 508 is further configured to determine current distribution information about robots in regions of the specified scenario and target distribution information about robots in the regions corresponding to the robot cross-region scheduling policy, calculate incremental information about the regions according to the current distribution information about the robots and the target distribution information about the robots in the regions, determine an outflow region and an inflow region in the regions according to the incremental information about the regions, determine a cross-region transfer channel from each outflow region to the inflow region, and perform the cross-region scheduling on the target robot in the specified scenario based on the cross-region transfer channel.

Optionally, the scheduling module 508 is further configured to construct an analysis model according to the outflow regions and the inflow regions, in which the analysis model includes a first resource loss of transferring a robot from each outflow region to an adjacent inflow region and a second resource loss of transferring a robot via a transfer region, and the transfer region is a region between the outflow region and the inflow region for transferring the robot, and determine the cross-region transfer channel from the each outflow region to the inflow region by using a preset resource loss optimization algorithm, based on the analysis model.

Optionally, the scheduling module 508 is further configured to acquire increment values of the outflow regions, determine a cross-region transfer channel from each outflow region to an adjacent inflow region in sequence according to the increment values of the outflow regions from small to large, and for an inflow region where a cross-region transfer channel has not been determined, determine the cross-region transfer channel from the each outflow region to the inflow region via a transfer region for transferring a robot according to a neighbor relationship between the regions.

Optionally, the device further includes a cross-region transfer channel determination module configured to determine a cross-region transfer channel for randomly transferring a robot from a target outflow region to an adjacent region, if the target outflow region with a number of remaining robots greater than a preset number exists.

Optionally, the device further includes a target robot determination module configured to determine a target robot to be scheduled according to the robot cross-region scheduling policy and a preset constraint.

Optionally, the first acquisition module 502 is further configured to count a total number of tasks to be executed in the specified scenario, a total number of robots, a total number of tasks to be executed in regions and current distribution information about robots in the regions, calculate the global average number of tasks to be executed in the specified scenario, according to the total number of tasks to be executed in the specified scenario and the total number of robots, and calculate the local average number of tasks to be executed in the regions, respectively, according to the total number of tasks to be executed and the current distribution information about the robots in the regions.

Optionally, the first acquisition module 502 is further configured to acquire attribute information about a task to be executed in the specified scenario, determine a quantity coefficient of the task to be executed according to the attribute information about the task to be executed, and count the total number of tasks to be executed in the specified scenario and the total number of tasks to be executed in the regions according to the quantity coefficient of the task to be executed.

Corresponding to the above method embodiment, the present invention also provides another robot scheduling device embodiment. FIG. 24 is a schematic diagram illustrating another robot scheduling device provided in an embodiment of the present invention. As shown in FIG. 24, the device includes a second acquisition module 602, a parsing module 604, a calculation module 606, and a switching execution module 608. The second acquisition module 602 is configured to acquire first binding information, first position information about a task to be executed and current position information about the robot. The first binding information includes a binding relationship between the robot and second position information about a task being currently executed. The parsing module 604 is configured to parse the first binding information to acquire the second position information. The calculation module 606 is configured to calculate a first distance between the robot and the task to be executed as well as a second distance between the robot and the task being currently executed according to the first position information, the second position information and the current position information. The switching execution module 608 is configured to perform switching to execute the task to be executed in a case that the first distance is less than the second distance.

Optionally, the second acquisition module 602 is further configured to acquire second binding information, in which the second binding information includes a binding relationship between the robot and current position information about the robot, and parse the second binding information to acquire the current position information.

Optionally, the device further includes a rebinding module configured to identify whether current position information about the robot changes, and configured to unbind the second binding information if the current position information changes, and rebind the robot and changed current position information to acquire updated second binding information.

Optionally, the first position information is a first lane identifier where the task to be executed is located, the second position information is a second lane identifier where the task being currently executed is located, and the current position information is a third lane identifier where the robot is located. Correspondingly, the calculation module 606 is further configured to calculate the first distance between the robot and the task to be executed according to the first lane identifier and the third lane identifier, and calculate the second distance between the robot and the task being currently executed according to the second lane identifier and the third lane identifier.

Optionally, the switching execution module 608 is further configured to identify whether the first lane identifier and the third lane identifier are the same in the case that the first distance is less than the second distance, and perform the switching to execute the task to be executed in a case that the first lane identifier is the same as the third lane identifier.

Optionally, the device further includes a cross-region task determination module configured to determine whether the task being currently executed is a cross-region task in the specified scenario according to the current position information and the second position information. The specified scenario is divided into the plurality of regions in advance. Correspondingly, the switching execution module 608 is further configured to perform the switching to execute the task to be executed in a case that the task being currently executed is not the cross-region task.

Optionally, the device further includes a first continuing execution module configured continue to execute the task being currently executed in a case that the task being currently executed is the cross-region task.

Optionally, the device further includes a switching times acquisition module configured to acquire a number of switching times corresponding to the task being currently executed. The number of switching times is a statistical result of a historical number of switching times of the task being currently executed. Correspondingly, the switching execution module 608 is further configured to perform the switching to execute the task to be executed in a case that the number of switching times is less than or equal to a preset times threshold.

Optionally, the device further includes a second continuing execution module is configured to continue to execute the task being currently executed in a case that the number of switching times is greater than the preset times threshold, and reset the number of switching times in a case that the first distance is less than a preset distance threshold.

Optionally, the device further includes a binding module is configured to bind the robot to the task to be executed, and update the first binding information according to a binding result.

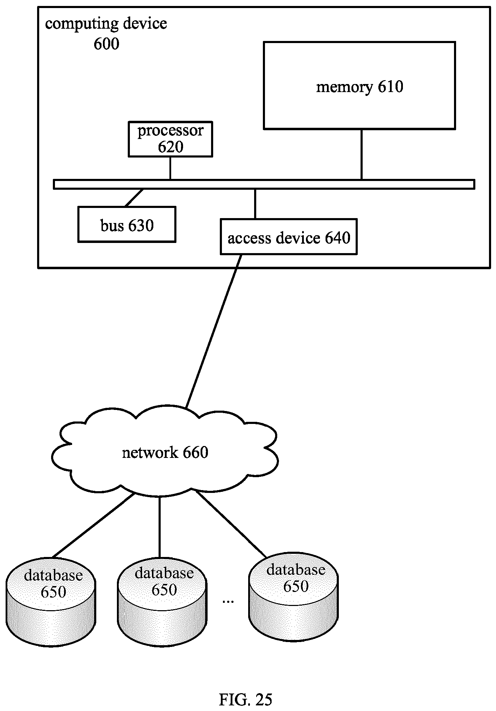

FIG. 25 is a block diagram showing a computing device provided in an embodiment of the present invention. Components of a computing device 700 include, but are not limited to a memory 710 and a processor 720. The processor 720 is connected to the memory 710 via a bus 730, and a database 750 is configured to store data.

The computing device 700 also includes an access device 740 that enables the computing device 700 to communicate via one or more networks 760. Examples of these networks include a public switched telephone network (PSTN), a local area network (LAN), a wide area network (WAN), a personal area network (PAN) or a combination of communication networks such as Internet. The access device 740 may include one or more of any type of wired or wireless network interface (e.g., a network interface controller (NIC)), such as an IEEE802.11 wireless local area network (WLAN,) wireless interface, a world interoperability for microwave access (Wi-MAX) interface, an Ethernet interface, a universal serial bus (USB) interface, a cellular network interface, a Bluetooth interface, a near field communication (NFC) interface, and so on.

In an embodiment of the present invention, the above components of the computing device 700 and other components not shown in FIG. 25 may also be connected to each other, for example, via a bus. It is to be understood that the block diagram of the computing device shown in FIG. 25 is only for illustrative purposes, and is not intended to limit the scope of the present invention. Those skilled in the art may add or replace other components as needed.

The computing device 700 may be any type of stationary or mobile computing device, including a mobile computer or a mobile computing device (e.g., a tablet computer, a personal digital assistant, a laptop computer, a notebook computer, a netbook, etc.), a mobile phone (e.g., a smart phone), a wearable computing device (e.g., a smart watch, a smart glass, etc.) or other types of mobile devices, or a stationary computing device such as a desktop computer or a personal computer (PC). The computing device 700 may also be a mobile or stationary server.

The processor 720 is configured to execute computer-executable instructions of the robot scheduling method.

The above is a schematic solution of the computing device of this embodiment. It is to be noted that the technical solution of the computing device and the technical solution of the above-mentioned robot scheduling method belong to a same concept, and details not described in detail in the technical solution of the computing device may be referred to the description of the technical solution of the above-mentioned robot scheduling method.

An embodiment of the present invention further provides a computer-readable storage medium having stored therein computer instructions that, when executed by a processor, cause the processor to implement steps of the robot scheduling method.

The above is a schematic solution of a computer-readable storage medium of this embodiment. It is to be noted that the technical solution of the storage medium and the technical solution of the above-mentioned robot scheduling method belong to a same concept, and details not described in detail in the technical solution of the storage medium may be referred to the description of the technical solution of the above-mentioned robot scheduling method.

The computer instructions include computer program code. The computer program code may be in a source code form, an object code form, an executable file or some intermediate forms, etc. The computer-readable medium may include any entity or device capable of carrying the computer program code, a recording medium, a USB flash drive, a mobile hard disk, a magnetic disk, an optical disk, a computer memory, a read-only memory (ROM), a random access memory (RAM), an electric carrier signal, a telecommunication signal, a software distribution medium, etc.

An embodiment of the present invention further provides a chip having stored therein a computer program that, when executed by the chip, cause the chip to implement steps of the robot scheduling method.

It is to be noted that for the sake of simplicity of description, the above-mentioned method embodiments are all described as a series of action combinations, but those skilled in the art should know that the present invention is not limited by a described order of actions, because some steps may be performed in other orders or simultaneously according to the present invention. Secondly, those skilled in the art should also know that the embodiments described herein are all preferred embodiments, and actions and modules involved are not necessarily required by the present invention.

In the above-mentioned embodiments, the description of each embodiment has its own emphasis. For parts that are not described in detail in a certain embodiment, reference may be made to relevant descriptions of other embodiments.

The preferred embodiments of the present invention disclosed above are only used to help illustrate the present invention. Alternative embodiments do not describe all the details in detail, nor do they limited the present invention to the embodiments described. Obviously, many modifications and changes may be made according to the contents of the present invention. The present invention selects and describes these embodiments in order to better explain the principle and practical application of the present invention, so that those skilled in the art may understand and utilize the present invention well. The present invention is limited only by the claims and their full scope and equivalents.

## Claims

1. A robot scheduling method, comprising:

   acquiring a global average number of tasks to be executed in a specified scenario and a local average number of tasks to be executed in regions, wherein the specified scenario is divided into a plurality of regions in advance;
   predicting a global task execution loss of the specified scenario according to the global average number of tasks to be executed and the local average number of tasks to be executed in the regions;
   determining a robot cross-region scheduling policy according to the global task execution loss; and
   performing cross-region scheduling on a target robot in the specified scenario by using the robot cross-region scheduling policy.

2. The method of claim 1, wherein predicting the global task execution loss of the specified scenario according to the global average number of tasks to be executed and the local average number of tasks to be executed in the regions comprises:

   predicting object idle information about the regions, respectively, according to the global average number of tasks to be executed and the local average number of tasks to be executed in the regions; and
   calculating the global task execution loss of the specified scenario according to the object idle information about the regions.

3. The method of claim 1, wherein determining the robot cross-region scheduling policy according to the global task execution loss comprises:
   determining the robot cross-region scheduling policy with the global task execution loss as an optimization goal.

4. The method of claim 3, wherein determining the robot cross-region scheduling policy with the global task execution loss as the optimization goal comprises:

   determining current distribution information about robots in the regions of the specified scenario and a current local average number of tasks to be executed in the regions;
   performing cross-region pre-scheduling on the robots in the regions according to the current distribution information about the robots in the regions, and calculating a target local average number of tasks to be executed in the regions after performing the cross-region pre-scheduling;
   predicting a current global task execution loss and a target global task execution loss of the specified scenario, according to the global average number of tasks to be executed, the current local average number of tasks to be executed and the target local average number of tasks to be executed in the regions;
   comparing the target global task execution loss with the current global task execution loss; and

determining a robot cross-region scheduling policy corresponding to the cross-region pre-scheduling in a case that the target global task execution loss is lower than the current global task execution loss.

5. The method of any one of claims 1 to 4, wherein performing the cross-region scheduling on the target robot in the specified scenario by using the robot cross-region scheduling policy comprises:

determining current distribution information about robots in regions of the specified scenario and target distribution information about robots in the regions corresponding to the robot cross-region scheduling policy; calculating incremental information about the regions according to the current distribution information about the robots and the target distribution information about the robots in the regions; determining an outflow region and an inflow region in the regions according to the incremental information about the regions; determining a cross-region transfer channel from each outflow region to the inflow region; and performing the cross-region scheduling on the target robot in the specified scenario based on the cross-region transfer channel.

6. The method of claim 5, wherein determining the cross-region transfer channel from the each outflow region to the inflow region comprises:

constructing an analysis model according to the outflow regions and the inflow regions, wherein the analysis model comprises a first resource loss of transferring a robot from each outflow region to an adjacent inflow region and a second resource loss of transferring a robot via a transfer region, and the transfer region is a region between the outflow region and the inflow region for transferring the robot; and determining the cross-region transfer channel from the each outflow region to the inflow region by using a preset resource loss optimization algorithm, based on the analysis model.

7. The method of claim 5, wherein determining the cross-region transfer channel from the each outflow region to the inflow region comprises:

acquiring increment values of the outflow regions; determining a cross-region transfer channel from each outflow region to an adjacent inflow region in sequence according to the increment values of the outflow regions from small to large; and for an inflow region where a cross-region transfer channel has not been determined, determining the cross-region transfer channel from the each outflow region to the inflow region via a transfer region for transferring a robot according to a neighbor relationship between the regions.

8. The method of claim 7, wherein after determining the cross-region transfer channel from the each outflow region to the inflow region via the transfer region for transferring the robot according to the neighbor relationship between the regions, for the inflow region where the cross-region transfer channel has not been determined, the methods further comprises: determining a cross-region transfer channel for randomly transferring a robot from a target outflow region to an adjacent region, if the target outflow region with a number of remaining robots greater than a preset number exists.

9. The method of any one of claims 1 to 4, wherein before performing the cross-region scheduling on the target robot in the specified scenario by using the robot cross-region scheduling policy, the method further comprises: determining a target robot to be scheduled according to the robot cross-region scheduling policy and a preset constraint.

10. The method of claim 1, wherein acquiring the global average number of tasks to be executed in the specified scenario and the local average number of tasks to be executed in the regions comprises:

counting a total number of tasks to be executed in the specified scenario, a total number of robots, a total number of tasks to be executed in regions and current distribution information about robots in the regions; calculating the global average number of tasks to be executed in the specified scenario, according to the total number of tasks to be executed in the specified scenario and the total number of robots; and calculating the local average number of tasks to be executed in the regions, respectively, according to the total number of tasks to be executed and the current distribution information about the robots in the regions.

11. The method of claim 10, wherein counting the total number of tasks to be executed in the specified scenario and the total number of tasks to be executed in the regions comprises:

acquiring attribute information about a task to be executed in the specified scenario;
determining a quantity coefficient of the task to be executed according to the attribute information about the task to be executed; and
counting the total number of tasks to be executed in the specified scenario and the total number of tasks to be executed in the regions according to the quantity coefficient of the task to be executed.

12. The method of claim 1, wherein after performing the cross-region scheduling on the target robot in the specified scenario by using the robot cross-region scheduling policy, the method further comprises:

acquiring first binding information, first position information about a task to be executed and current position information about the robot, wherein the first binding information comprises a binding relationship between the robot and second position information about a task being currently executed;
parsing the first binding information to acquire the second position information;
calculating a first distance between the robot and the task to be executed as well as a second distance between the robot and the task being currently executed according to the first position information, the second position information and the current position information; and
performing switching to execute the task to be executed in a case that the first distance is less than the second distance.

13. The method of claim 12, wherein acquiring the current position information about the robot comprises:

acquiring second binding information, wherein the second binding information comprises a binding relationship between the robot and current position information about the robot; and
parsing the second binding information to acquire the current position information.

14. The method of claim 13, further comprising:

identifying whether current position information about the robot changes; and
unbinding the second binding information if the current position information changes, and rebinding the robot and changed current position information to acquire updated second binding information.

15. The method of any one of claims 12 to 14, wherein the first position information is a first lane identifier where the task to be executed is located, the second position information is a second lane identifier where the task being currently executed is located, and the current position information is a third lane identifier where the robot is located;
wherein calculating the first distance between the robot and the task to be executed as well as the second distance between the robot and the task being currently executed according to the first position information, the second position information and the current position information comprises:

calculating the first distance between the robot and the task to be executed according to the first lane identifier and the third lane identifier; and
calculating the second distance between the robot and the task being currently executed according to the second lane identifier and the third lane identifier.

16. The method of claim 15, wherein performing the switching to execute the task to be executed in the case that the first distance is less than the second distance comprises:

identifying whether the first lane identifier and the third lane identifier are the same in the case that the first distance is less than the second distance; and
performing the switching to execute the task to be executed in a case that the first lane identifier is the same as the third lane identifier.

17. The method of any one of claims 12 to 14, wherein before performing the switching to execute the task to be executed, the method further comprises:

determining whether the task being currently executed is a cross-region task in the specified scenario according to the current position information and the second position information, wherein the specified scenario is divided into the plurality of regions in advance;

wherein performing the switching to execute the task to be executed comprises:

performing the switching to execute the task to be executed in a case that the task being currently executed is not the cross-region task.

18. The method of claim 17, wherein after determining whether the task being currently executed is the cross-region task in the specified scenario according to the current position information and the second position information, the method further comprises:

continuing to execute the task being currently executed in a case that the task being currently executed is the cross-region task.

19. The method of any one of claims 12 to 14, wherein before performing the switching to execute the task to be executed, the method further comprises:

acquiring a number of switching times corresponding to the task being currently executed, wherein the number of switching times is a statistical result of a historical number of switching times of the task being currently executed;

wherein performing the switching to execute the task to be executed comprises:

performing the switching to execute the task to be executed in a case that the number of switching times is less than or equal to a preset times threshold.

20. The method of claim 19, wherein after acquiring the number of switching times corresponding to the task being currently executed, the method further comprises:

continuing to execute the task being currently executed in a case that the number of switching times is greater than the preset times threshold, and resetting the number of switching times in a case that the first distance is less than a preset distance threshold.

21. The method of claim 12, wherein after performing the switching to execute the task to be executed, the method further comprises:

binding the robot to the task to be executed, and updating the first binding information according to a binding result.

22. A robot scheduling device, comprising:

a first acquisition module configured to acquire a global average number of tasks to be executed in a specified scenario and a local average number of tasks to be executed in regions, wherein the specified scenario is divided into a plurality of regions in advance;

a prediction module configured to predict a global task execution loss of the specified scenario according to the global average number of tasks to be executed and the local average number of tasks to be executed in the regions;

a determination module configured to determine a robot cross-region scheduling policy according to the global task execution loss; and

a scheduling module configured to perform cross-region scheduling on a target robot in the specified scenario by using the robot cross-region scheduling policy.

23. The device of claim 22, further comprising:

a second acquisition module configured to acquire first binding information, first position information about a task to be executed and current position information about the robot, wherein the first binding information comprises a binding relationship between the robot and second position information about a task being currently executed;

a parsing module configured to parse the first binding information to acquire the second position information;

a calculation module configured to calculate a first distance between the robot and the task to be executed as well as a second distance between the robot and the task being currently executed according to the first position information, the second position information and the current position information; and

a switching execution module configured to perform switching to execute the task to be executed in a case that the first distance is less than the second distance.

24. A computing device, comprising:

a memory; and
a processor;
wherein the memory is configured to store therein computer-executable instructions, and the processor is configured to execute the computer-executable instructions to implement steps of the robot scheduling method of any one of claims 1 to 21.

25. A computer-readable storage medium having stored therein computer instructions that, when executed by a processor, cause the processor to implement steps of the robot scheduling method of any one of claims 1 to 21.

robot scheduling terminal 101

robot 102    robot 102    robot 102

a plurality of robot 102

FIG. 1

acquiring a global average number of tasks to be executed in a specified scenario and a local average number of tasks to be executed in regions, in which the specified scenario is divided into a plurality of regions in advance    S202

predicting a global task execution loss of the specified scenario according to the global average number of tasks to be executed and the local average number of tasks to be executed in the regions    S204

determining a robot cross-region scheduling policy according to the global task execution loss    S206

performing cross-region scheduling on a target robot in the specified scenario by using the robot cross-region scheduling policy    S208

FIG. 2

a global average number of tasks
to be executed: 21

| region 1 | region 2 |
|---|---|
| a number of tasks to be executed: 8 <br><br> robot 1 | a number of tasks to be executed: 15 |

FIG. 3

a global average number of tasks to
be executed: 21

| region 1 | region 2 |
|---|---|
| a number of tasks to be executed: 8 | a number of tasks to be executed: 15 <br><br> robot 1 |

FIG. 4

position information about
regions and a number of tasks
to be executed in the regions

target distribution information
about robots in the regions
after completing scheduling

FIG. 5

a global average number of tasks to be
executed: 21

region 1

a number of tasks to be
executed: 28

robot 1     robot 2

region 2

a number of tasks to be
executed: 35

robot 3

FIG. 6

a global average number of tasks to be
executed: 21

region 1

a number of tasks to be
executed: 28

robot 1

region 2

a number of tasks to be
executed: 35

robot 2     robot 3

FIG. 7

current distribution
information about robots

a total number of tasks to
be executed in regions

target distribution information about
robots in the regions after
performing cross-region scheduling

FIG. 8

FIG. 9

FIG. 10

FIG. 11

FIG. 12

current distribution of robots

target distribution of robots

actual distribution of robots after
performing cross-region scheduling

FIG. 13

distribution of incremental values of
robots in regions

FIG. 14

FIG. 15

FIG. 16

acquiring first binding information, first position information about a task to be executed and current position information about the robot, in which the first binding information includes a binding relationship between the robot and second position information about a task being currently executed

S302

parsing the first binding information to acquire the second position information

S304

calculating a first distance between the robot and the task to be executed as well as a second distance between the robot and the task being currently executed according to the first position information, the second position information and the current position information

S306

performing switching to execute the task to be executed in a case that the first distance is less than the second distance

S308

FIG. 17

second robot

first robot

task to be executed in the second position

task to be executed in the first position

first position

second position

FIG. 18

task to be executed
in the second
position

second robot

first robot

task to be executed in the first
position

first position          second position

FIG. 19

second robot

task to be executed
in the second
position

first robot

task to be executed in the
first position

first position          second position

FIG. 20

task to be executed in current position

task to be executed in third position

FIG. 21

acquiring attribute information about a task to be executed in the warehousing scenario —— S402

determining a quantity coefficient of the task to be executed according to the attribute information about the task to be executed —— S404

counting a total number of tasks to be executed in the warehousing scenario and a total number of tasks to be executed in the regions according to the quantity coefficient of the task to be executed —— S406

counting the total number of tasks to be executed and a total number of robots in the warehousing scenario —— S408

calculating a global average number of tasks to be executed in the warehousing scenario according to the total number of tasks to be executed and the total number of robots in the warehousing scenario —— S410

calculating a local average number of tasks to be executed in regions respectively, according to a total number of tasks to be executed and current distribution information about the robots in the regions —— S412

predicting object idle information about the regions respectively, according to the global average number of tasks to be executed and the local average number of tasks to be executed in the regions —— S414

calculating a global task execution loss of the warehousing scenario according to the object idle information about the regions —— S416

determining current distribution information about the robots in the regions of the warehousing scenario and a current local average number of tasks to be executed in the regions —— S418

performing cross-region pre-scheduling on the robots in the regions according to the current distribution information about the robots in the regions, and calculating a target local average number of tasks to be executed in the regions after performing the cross-region pre-scheduling —— S420

predicting a current global task execution loss and a target global task execution loss of the warehousing scenario according to the global average number of tasks to be executed, the current local average number of tasks to be executed and the target local average number of tasks to be executed in the regions —— S422

comparing the target global task execution loss with the current global task execution loss —— S424

determining a robot cross-region scheduling policy corresponding to the cross-region pre-scheduling in a case that the target global task execution loss is lower than the current global task execution loss —— S426

performing switching to execute the task to be executed in a case that the first lane identifier is the same as the third lane identifier —— S452

identifying whether the first lane identifier and the third lane identifier are the same in a case that the first distance is less than the second distance —— S450

calculating a second distance between the robot and the task being currently executed according to the second lane identifier and the third lane identifier —— S448

calculating a first distance between the robot and the task to be executed according to the first lane identifier and the third lane identifier —— S446

parsing the second binding information to acquire the third lane identifier —— S444

acquiring second binding information —— S442

acquiring first binding information and a first lane identifier of the task to be executed —— S440

performing cross-region scheduling on a target robot in the warehousing scenario based on the cross-region transfer channel —— S438

determining a cross-region transfer channel from the each outflow region to the inflow region by using a preset resource loss optimization algorithm, based on the analysis model —— S436

constructing an analysis model according to each outflow region and the inflow region, in which the analysis model includes a first resource loss of transferring a robot from each outflow region to an adjacent inflow region and a second resource loss of transferring a robot via a transfer region, and the transfer region is a region between the outflow region and the inflow region for transferring the robot —— S434

determining an outflow region and an inflow region in the regions according to the incremental information about the regions —— S432

calculating incremental information about the regions according to the current distribution information about the robots and the target distribution information about the robots in the regions —— S430

determining target distribution information about the robots in the regions corresponding to the robot cross-region scheduling policy —— S428

FIG. 22

first acquisition module 502

a global average number of
tasks to be executed
a local average number of tasks
to be executed

prediction module 504

global task execution loss

scheduling module 508

target robot

determination module 506

robot cross-region scheduling
policy

FIG. 23

second acquisition module 602

first binding information
first position information
current position information

parsing module 604

first binding information

switching execution module 608

task to be executed

calculation module 606

first distance
second distance

FIG. 24

FIG. 25

## INTERNATIONAL SEARCH REPORT

| International application No. |
|---|
| **PCT/CN2023/123587** |

| A. | CLASSIFICATION OF SUBJECT MATTER |
|---|---|

G06Q10/06(2023.01)i; B25J9/16(2006.01)i

According to International Patent Classification (IPC) or to both national classification and IPC

| B. | FIELDS SEARCHED |
|---|---|

Minimum documentation searched (classification system followed by classification symbols)

    IPC: G06Q B25J

Documentation searched other than minimum documentation to the extent that such documents are included in the fields searched

Electronic data base consulted during the international search (name of data base and, where practicable, search terms used)

    CNTXT; ENTXTC; CNKI: 机器人, 调度, 调配, 分配, 任务, 任务量, 任务数, 数量, 平均, 调入, 调出, 多个, 区, 跨区; VEN; ENTXT: robot, dispatch, scheduling, allocate, allot, deploy, task, job, work, amount, quantity, average, multi, region, district, call in, call out.

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114596016 A (SHANGHAI QUICKTRON INTELLIGENT TECHNOLOGY CO., LTD.) 07 June 2022 (2022-06-07)<br>    description, paragraphs 81-176, and figures 1-14 | 1-25 |
| A | CN 108398924 A (BEIJING JINGDONG SHANGKE INFORMATION TECHNOLOGY CO., LTD. et al.) 14 August 2018 (2018-08-14)<br>    entire document | 1-25 |
| A | CN 111308995 A (BEIJING JINGDONG QIANSHI TECHNOLOGY CO., LTD.) 19 June 2020 (2020-06-19)<br>    entire document | 1-25 |
| A | CN 112077861 A (JIANGXI SPACE ROBOT TECHNOLOGY CO., LTD.) 15 December 2020 (2020-12-15)<br>    entire document | 1-25 |
| A | US 2019061166 A1 (HITACHI, LTD.) 28 February 2019 (2019-02-28)<br>    entire document | 1-25 |

| ☐ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/123587**

| Patent document cited in search report | | | Publication date (day/month/year) | Patent family member(s) | | | Publication date (day/month/year) |
|---|---|---|---|---|---|---|---|
| CN | 114596016 | A | 07 June 2022 | CN | 114444989 | A | 06 May 2022 |
| | | | | JP | 7066029 | B1 | 12 May 2022 |
| | | | | WO | 2022095316 | A1 | 12 May 2022 |
| | | | | CN | 114595907 | A | 07 June 2022 |
| | | | | JP | 2022089744 | A | 16 June 2022 |
| | | | | JP | 2022089754 | A | 16 June 2022 |
| | | | | KR | 20230023036 | A | 16 February 2023 |
| | | | | EP | 4207019 | A1 | 05 July 2023 |
| CN | 108398924 | A | 14 August 2018 | CN | 108398924 | B | 01 September 2020 |
| CN | 111308995 | A | 19 June 2020 | None | | | |
| CN | 112077861 | A | 15 December 2020 | None | | | |
| US | 2019061166 | A1 | 28 February 2019 | JP | 2019038048 | A | 14 March 2019 |
| | | | | JP | 6875228 | B2 | 19 May 2021 |
| | | | | US | 11007650 | B2 | 18 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211249762
- CN 202211245844